# EUROPÄISCHE PATENTSCHRIFT

(11) **EP 1 901 149 B1**
(45) Veröffentlichungstag und Bekanntmachung des Hinweises auf die Patenterteilung: **13.10.2010**
(21) Anmeldenummer: 07017075.8
(22) Anmeldetag: 31.08.2007
(51) Int. Cl.: G05B 19/05, G05B 19/4069

(54) **Vorrichtung und Verfahren zur Simulation eines Ablaufs zur Bearbeitung eines Werkstücks an einer Werkzeugmaschine**
Device and method for simulating the processing of a workpiece on a machine tool
Procédé et dispositif destinés à la simulation de l'usinage d'une pièce sur une machine-outil

(30) Priorität: 15.09.2006 DE 102006043390
(43) Veröffentlichungstag der Anmeldung: 19.03.2008
(73) Patentinhaber: DMG Electronics GmbH, 87459 Pfronten (DE)
(72) Erfinder: Hahn, Rudolf, 87645 Schwangau (DE); Herz, Manfred, 87499 Wildpoldsried (DE)
(74) Vertreter: MERH-IP Matias Erny Reichl Hoffmann

(56) Entgegenhaltungen:
- EP-A- 0 389 990
- EP-A- 0 902 343
- EP-A- 1 505 462
- DE-A1- 10 341 325
- DE-A1- 10 345 626
- DE-A1- 10 360 530
- PRITSCHOW ET AL: "Simulation, Werkzeugmaschinen, Steuerungen. Wege zur virtuellen Werkzeugmaschine. Verschiedene Betrachtungsweisen und Modellierungsansätze" WERKSTATTSTECHNIK, SPRINGER VERLAG. BERLIN, DE, Bd. 92, Nr. 5, 1. Januar 2002 (2002-01-01), Seiten 194-199, XP001538243 ISSN: 0340-4544
- BEESTEN ET AL: "3D-Simulation in der SPS-SoftwareEntwicklung Fertige Programme für fiktive Maschinen" IEE - AUTOMATISIERUNG UND DATENTECHNIK, HUETHIG, HEIDELBERG, DE, [Online] Bd. 49, Nr. 11, 1. November 2004 (2004-11-01), Seiten 156-159, XP009100281 ISSN: 1434-2898 Gefunden im Internet: URL:http://www.tarakos.de/eng/News/Presse/ iee-tarakos.pdf> [gefunden am 2008-06-17]
- KAMEL KLIBI: "Simulation zur Optimierung der SPS-Softwareentwicklung"[Online] 5. Juli 2004 (2004-07-05), Seiten 1-6, XP002484680 Gefunden im Internet: URL:http://www.sim-serv.com/white_paper.ph p?i=0&ids_string=26&language=_ge> [gefunden am 2008-06-17]
- MEIER H ET AL: "Virtuelle Maschinen für eine realistische Simulation" WERKSTATTSTECHNIK, SPRINGER VERLAG. BERLIN, DE, Bd. 90, Nr. 1/2, 1. Januar 2000 (2000-01-01), Seiten 19-21, XP009100265 ISSN: 0340-4544

## Beschreibung

Die vorliegende Erfindung betrifft eine Vorrichtung und ein Verfahren zur Simulation eines Ablaufs zur Bearbeitung eines Werkstücks an einer Werkzeugmaschine. Insbesondere wird die Simulation von Abläufen an CNC (computerized numerical control)-Maschinen ermöglicht.

Unter CNC versteht man eine numerische Steuerung, die einen oder mehrere Mikroprozessoren für die Ausführung der Steuerungsfunktionen umfasst. Äußeres Kennzeichen einer CNC sind ein Bildschirm und eine Tastatur. Die numerische Steuerung (CNC) wird mit einem CNC-Programm betrieben, das alle erforderlichen Funktionen umfasst, wie zum Beispiel Interpolation, Lage- und Geschwindigkeitsregelung. Mit Hilfe des einen oder der mehreren Mikroprozessoren und dem CNC-Programm wird ein werkstückabhängiges CNC-Teileprogramm ausgeführt, das in der Regel vom Benutzer der Maschine spezifiziert wird.

Ein CNC-Teileprogramm besteht aus einer beliebigen Anzahl von Sätzen, die den gesamten Arbeitsablauf der Maschine zur Bearbeitung eines Werkstücks schrittweise beschreiben. Jeder Satz im Programm repräsentiert einen geometrischen Bearbeitungsschritt und/oder eine bestimmte Maschinenfunktion. Ein Satz kann unterschiedliche Anweisungen enthalten. Man unterscheidet dabei
- geometrische Anweisungen, mit denen die Relativbewegungen zwischen Werkzeug und Werkstück gesteuert werden,
- technologische Anweisungen, mit denen Vorschubgeschwindigkeit, Spindeldrehzahl und Werkzeuge festgelegt werden,
- Fahranweisungen, die die Art der Bewegung bestimmen, wie zum Beispiel Eilgang, Linearinterpolation, Zirkularinterpolation und Ebenenauswahl,
- Schaltbefehle zur Auswahl der Werkzeuge, Schalttischstellungen, Kühlmittelzufuhr,
- Korrekturaufrufe, zum Beispiel für Werkzeuglängenkorrektur, Fräserdurchmesserkorrektur, Schneidenradiuskorrektur und Nullpunktverschiebung, sowie
- Zyklen- oder Unterprogrammaufrufe für häufig wiederkehrende Programmabschnitte.

Neben der numerischen Steuerung, dem CNC-Programm und dem CNC-Teileprogramm bedarf es zusätzlich eines Anpassprogramms (PLC-Programm) an die zu steuernde Maschine, das der Maschinenhersteller erstellt und in eine speicherprogrammierbare Anpasssteuerung (SPS = PLC (programmable logic controller)) integriert. Darin sind alle maschinenbezogenen Verknüpfungen und Verriegelungen für spezielle Funktionsabläufe festgelegt, wie zum Beispiel für Werkzeugwechsel, Werkstückwechsel und die Achsbegrenzungen.

Zur weiteren Abgrenzung zwischen CNC und PLC sollen einige Unterschiede herausgestellt werden. Ein CNC-Teileprogramm für die Bearbeitung der Werkstücke wird vom Maschinenanwender erstellt. CNC-Teileprogramme können beliebig vom Anwender gewechselt oder modifiziert werden. Ein PLC-Programm hingegen wird vom Maschinenhersteller erstellt und unverlierbar gespeichert, zum Beispiel auf einem ROM (read only memory). Das PLC-Programm muss nur in Ausnahmefällen geändert oder getauscht werden. Insbesondere erfolgt bei der PLC keine Programmierung während des Betriebs. PLC-Programme müssen für jede PLC (speicherprogrammierbare Steuerung) erstellt werden und sind nicht für andere PLC-Fabrikate kompilierbar. Basierend auf diesem zentralen Unterschied ergibt sich, dass es pro Maschine bis zu mehrere tausend CNC-Teileprogramme geben kann. Die CNC-Teileprogramme erstellt der Maschinenanwender, feste Zyklen und Unterprogramme kann durchaus der Hersteller liefern. Für eine PLC gibt es in der Regel nur ein einziges festes, anlagenbezogenes Programm. Das Programm erstellt der Maschinenhersteller, meist unter Nutzung verfügbarer Funktionsbausteine.

Aus dem Stand der Technik sind Simulationssysteme zur Simulation des Abtrags an einem Werkstück durch eine Werkzeugmaschine bekannt. Dabei wird beispielsweise das Werkstück und der an diesem durch die Werkzeugmaschine vorgenommene Abtrag dreidimensional visualisiert. Das visualisierte Werkstück kann aus verschiedenen Blickwinkeln betrachtet werden.

Darauf aufbauend sind Systeme bekannt, die es dem Benutzer in einer grafischen Umgebung, die das Werkstück und Teile der Werkzeugmaschine visualisiert, ermöglichen, Bearbeitungsabläufe zu spezifizieren, die in dem System am virtuellen Modell getestet werden können und die anschließend in ein CNC-Teileprogramm übersetzt werden.

Ein Beispiel für den oben beschriebenen Stand der Technik ist in EP 0 902 343 offenbart. Das dort beschriebene System erlaubt die Erstellung eines CNC-Teileprogramms für ein virtuelles Werkstück unter Verwendung mindestens einer virtuellen Funktionseinheit. Der Benutzer kann in diesem System virtuelle Aktionen mittels einer Daten-Eingabeeinrichtung spezifizieren. Die vorgegebenen virtuellen Aktionen an den virtuellen Funktionseinheiten werden unter Berücksichtigung einer vorgegebenen Maschinen- und Steuerungskonfiguration selbsttätig in kollisionsfreie Aktionen erlaubende Steuerdatensätze des Steuerprogramms umgesetzt. In diesem System muss der Benutzer die Maschinen- und Steuerungskonfiguration nicht kennen. Die in der Maschinen- und Steuerungskonfiguration steckende Komplexität wird vom Benutzer auf die Datenverarbeitungseinrichtung verlagert, so dass der Benutzer die Möglichkeit hat, sich ausschließlich auf die vorzugebenden virtuellen Aktionen und virtuellen Funktionseinheiten zu konzentrieren.

Die DE 10360530 A1 beschreibt die virtuelle Inbetriebnahme einer Maschine, die nicht an einer realen Maschine vorgenommen wird, sondern an einem auf die Maschine zugeschnittenen numerischen Modell. Dieser Simulator umfasst eine numerische Steuerung, die mit der Steuerung der realen Maschine identisch oder zu dieser äquivalent ist. Dabei wird ebenfalls ein Achsenmodell sowie ein Maschinenmodell verwendet, wobei das Achsenmodell dazu ausgebildet ist, einen Achsen-Ist-Wert zu berechnen und das Maschinenmodell dazu ausgebildet ist, anhand des Achsen-Ist-Werts mindestens ein Zustandssignal zu erzeugen.

Der Artikel "Wege zur virtuellen Werkzeugmaschine" von G. Pritschow und N. Croon veröffentlicht in wt. Werkstattstechnik, 92 (2002) H.5, 2002, S. 194-199, beschäftigt sich mit der Frage einer einheitlichen Definition für den Begriff "virtuelle Werkzeugmaschine" und stellt verschiedene zugehörige Konzept vor. Dabei wird darauf hingewiesen, dass die Integration der speicherprogrammierbaren Steuerung einer Simulationsumgebung von einem frühen Entwicklungsstadium erfolgen soll.

In der Publikation "3D-Simulation in der SPS-Software-Entwicklung - Fertige Programme für fiktive Maschinen" von H. Beesten veröffentlicht in IEE 49. Jahrgang 11-2004, 2004, S. 156-159, wird das Konzept einer virtuellen Maschine vorgestellt, mithilfe dessen bereits vor Erstellung der realen Maschine SPS- und CNC-Programme realitätsnah entwickelt und getestet werden können.

Ausgehend vom Stand der Technik ergibt sich die Aufgabe, eine Vorrichtung und ein Verfahren zur Simulation von Abläufen an Werkzeugmaschinen bereitzustellen, die eine verbesserte Simulation von Bewegungsabläufen an Werkzeugmaschinen ermöglichen.

Erfindungsgemäß wird diese Aufgabe gelöst durch eine Vorrichtung mit den Merkmalen des Anspruchs 1, durch ein Verfahren mit den Merkmalen des Anspruchs 3 und ein Computerprogrammprodukt mit den Merkmalen des Anspruchs 5.

Vorteilhafte Ausgestaltungen und bevorzugte Ausführungsbeispiele der Erfindung sind in den Unteransprüchen angegeben.

Die Erfindung beschreibt eine Vorrichtung zur Simulation eines Ablaufs zur Bearbeitung eines Werkstücks an einer Werkzeugmaschine. Erfindungsgemäß umfasst diese Vorrichtung eine erste Speichereinrichtung zur Speicherung von Werkzeugmaschinendaten zur Erzeugung eines virtuellen Abbilds einer Werkzeugmaschine, eine zweite Speichereinrichtung zur Speicherung von Werkstückdaten zur Erzeugung eines virtuellen Abbilds mindestens eines Werkstücks und eine dritte Speichereinrichtung zur Speicherung von Betriebsmitteldaten zur Erzeugung eines virtuellen Abbilds mindestens eines Betriebsmittels.

Durch diese Einrichtungen werden die für die Erzeugung eines realitätsnahen Abbildes der Werkzeugmaschine notwendige Daten bereitgestellt. Dies beinhaltet nicht nur eine Darstellung des Werkzeugtisches und des Werkstückes, sondern auch die Möglichkeit, die Spannsituation im Detail während der Simulation darzustellen. Ferner wird es ermöglicht, die Werkzeugmaschine in verschiedenen Konfigurationen, z.B. beinhaltend die Schutzkabine, d.h. als Ansicht von außen, oder in einer Nahansicht zur ausschließlichen Darstellung des Werkzeugtisches samt Werkstück und Werkzeug, darzustellen. Die entsprechenden Daten werden von den entsprechenden Einrichtungen der Gesamtsimulationseinrichtung zugeführt. Damit liegt virtuell eine mit Werkstück und Werkzeug bestückte Werkzeugmaschine vor.

Eine besonders realitätsnahe Darstellung eines Bearbeitungsvorgangs eines Werkstücks an einer Werkzeugmaschine wird erfindungsgemäß dadurch realisiert, dass eine CNC-Steuereinrichtung, eine PLC-Steuereinrichtung und eine PLC-Ablaufsimulationseinrichtung bereitgestellt werden, die den notwendigen Datenaustausch untereinander vornehmen. Dabei erzeugt die CNC-Steuereinrichtung in Abhängigkeit der Steuerdaten, die durch eine entsprechende Einrichtung wie beispielsweise eine Eingabeeinrichtung durch den Nutzer oder einen Datenträger bereitgestellt werden, CNC-Daten, die den entsprechenden Steuersignalen an die Werkzeugmaschine und/oder den entsprechenden Zuständen der Werkzeugmaschine entsprechen.

Besondere Bedeutung kommt bei der erfindungsgemäßen Vorrichtung der PLC-Simulation zu. Diese wird bei der vorliegenden Erfindung durch das Zusammenspiel einer PLC-Steuereinrichtung zur Erzeugung von PLC-Steuerungs-Ausgangsdaten und einer PLC-Ablaufsimulationseinrichtung zur Erzeugung von PLC-Simulationsdaten und von PLC-Steuerungs-Eingangsdaten in Abhängigkeit der PLC-Steuerungs-Ausgangsdaten und der Werkzeugmaschinendaten realisiert. Der PLC-Steuereinrichtung kommt dabei die Aufgabe zu, PLC-Steuerungs-Ausgangsdaten zu erzeugen. Diese können z.B. durch entsprechende Sätze eines CNC-Teileprogramms aufgerufen werden und entsprechen den Befehlen, die sich auf Bearbeitungszustände der Werkzeugmaschine beziehen. In Reaktion darauf erzeugt die PLC-Ablaufsimulationseinrichtung PLC-Steuerungs-Eingangsdaten, die der PLC-Steuereinrichtung den Betriebszustand der Werkzeugmaschine mitteilen. Hierdurch wird die Beschreibung eines vollständigen Ablaufs der Bearbeitungsvorgänge einschließlich der durch die CNC- und PLC-Steuerung ausgegebenen Befehle ermöglicht.

Darüber hinaus generiert die PLC-Ablaufsimulationseinrichtung PLC-Simulationsdaten, die die PLC-gesteuerten Bewegungsabläufe beschreiben. Die Gesamtsimulationseinrichtung erhält die PLC-Simulationsdaten und die CNC-Daten und ermöglicht es somit in Kombination mit der CNC-Steuereinrichtung, der PLC-Steuereinrichtung und der PLC-Ablaufsimulation erstmalig, alle an einer realen Werkzeugmaschine ausführbaren Bewegungsabläufe zu simulieren.

Aufbauend auf diesem Konzept wird durch die erfindungsgemäße Vorrichtung eine Struktur bereitgestellt, die es in einfacher Weise ermöglicht, sämtlich Funktionen, wie sie an einer realen Werkzeugmaschine gegeben sind, in der Simulation zu implementieren. Beispielsweise können in einfacher Weise durch geeignete Module Bearbeitungsfunktionen wie z.B. Override oder manuelle Verfahrvorgänge von Tisch, Kopf und Spindel in der Simulation dargestellt werden. Hierdurch wird es ermöglicht, datenverarbeitungstechnisch eine Grundstruktur bereitzustellen, die weitgehend an die realen Datenverarbeitungsabläufe an der Werkzeugmaschine angepasst ist und, soweit gewünscht, fortlaufend ergänzt werden kann.

Mit anderen Worten wird insbesondere durch die Interaktion zwischen CNC-Steuereinrichtung, PLC-Steuereinrichtung, PLC-Ablaufsimulationseinrichtung und Gesamtsimulationseinrichtung ein ganzheitlicher Simulationsansatz verwirklicht, bei dem aufgrund der Berücksichtigung der entsprechenden Teilfunktionen bei der Bearbeitung des Werkstücks eine besonders realitätsnahe Simulation bereitgestellt werden kann.

Hierdurch vermag die erfindungsgemäße Simulationsvorrichtung Aufgaben zu leisten, die herkömmlichen Simulationsansätzen bislang verschlossen blieben. Beispielsweise können sämtliche drohenden Kollisionen erkannt werden, insbesondere auch die Kollisionen, die durch PLC-Abläufe verursacht werden können. Z.B. kann der automatische Austausch von Werkzeugen (Werkzeugautomation) und der automatische Austausch von Werkstücken (Werkstückautomation) mit simuliert werden. Auf diese Weise ist es z.B. möglich, Kollisionen zu erkennen, die darauf beruhen, dass ein Werkzeugwechsel bei geschlossener Klappe zum Werkzeugmagazin vorgenommen werden soll, dass ein Werkzeug in die Spindel aufgenommen werden soll, obwohl dort noch ein anderes Werkzeug eingespannt ist, oder dass ein aus der Spindel entnommenes Werkzeug im Werkzeugmagazin an einem Platz eingefügt werden soll, an dem sich bereits ein anderes Werkzeug befindet. Im Rahmen der Simulation der Werkstückautomation kann z.B. der Palettenspeicher, der beispielsweise in Kreisform oder auch in Regalform aufgebaut sein kann, mit simuliert werden. Kollisionen können erkannt werden, die z.B. dadurch verursacht werden, dass ein Werkstück auf der Palette falsch eingespannt ist, so dass es beim Einführen der Palette in die Werkzeugmaschine zu einem Zusammenstoß kommen würde.

Darüber hinaus ist durch die erfindungsgemäße Simulationsvorrichtung eine realistische Abschätzung von Maschinenbelegungszeiten dadurch möglich, dass die PLC-Steuereinrichtung das Verhalten einer realen PLC-Steuerung abzubilden vermag und mit einer PLC-Ablaufsimulationseinrichtung interagiert, die es ermöglicht, das zeitliche Verhalten der PLC-Abläufe realistisch zu simulieren. Da ein Großteil der Kosten der Produktion eines Werkstücks mit den Maschinenbelegungszeiten zusammenhängt, wird es durch die erfindungsgemäße Simulationsvorrichtung möglich, schnell und akkurat Kostenvorhersagen für die Produktion eines Werkstücks zu treffen.

Vorzugsweise umfasst die CNC-Steuereinrichtung ein CNC-Programm, das aus dem Quellcode eines CNC-Programms einer realen CNC-Steuerung erzeugt wurde.

Der Hintergrund hierbei ist, dass Hersteller von Steuerungen für reale Werkzeugmaschinen ihre CNC-Programme in einer Hochsprache programmieren und für das Betriebssystem der CNC-Steuerung kompilieren. Erfindungsgemäß wird in dieser Ausführungsform dieses CNC-Programm in der Hochsprache hergenommen und es wird daraus eine Version des CNC-Programms erzeugt, die auf einem handelsüblichen Computer lauffähig ist. Dadurch wird erreicht, dass die CNC-Steuereinrichtung eine exakte Nachbildung der realen CNC-Steuereinrichtung ist, die auf einem PC lauffähig ist.

Erfindungsgemäß umfasst die PLC-Steuereinrichtung ein PLC-Programm einer realen PLC-Steuerung oder ein PLC-Programm, das aus dem Quellcode eines PLC-Programms einer realen PLC-Steuerung erzeugt wurde.

Der Hintergrund hierbei ist ähnlich wie bei dem CNC-Programm. Wenn das PLC-Programm der realen PLC-Steuerung direkt von der PLC-Steuereinrichtung ausgeführt werden kann, so wird in dieser Ausführungsform das PLC-Programm der realen PLC-Steuerung ohne Änderungen übernommen. Häufig programmieren die Hersteller von PLC-Steuereinrichtungen das PLC-Programm jedoch in einer Hochsprache und kompilieren dieses Programm für das Betriebssystem der PLC-Steuerung. In diesem Falle wird vorzugsweise exakt dieses PLC-Programm in der Hochsprache hergenommen und so kompiliert oder interpretiert, dass es auf einem handelsüblichen Computer lauffähig ist. Dadurch wird erreicht, dass auch die PLC-Steuereinrichtung eine exakte Abbildung der realen PLC-Steuereinrichtung ist.

Erfindungsgemäß umfasst die Einrichtung zur Bereitstellung von Steuerdaten eine Speichereinrichtung zur Speicherung mindestens eines CNC-Teileprogramms, wobei das CNC-Teileprogramm auf einer realen Werkzeugmaschine ausführbar ist.

Dies ermöglicht, dass in der erfindungsgemäßen Vorrichtung ein CNC-Teileprogramm gespeichert und verwendet wird, das einem CNC-Teileprogramm entspricht, wie es auf einer realen Werkzeugmaschine ausgeführt wird. Insgesamt ergibt sich der Vorteil, dass eine reale Werkzeugmaschine realitätsnah simuliert werden kann.

Zusätzlich umfasst die Einrichtung zur Bereitstellung von Steuerdaten weiterhin eine Eingabeeinrichtung zur manuellen Eingabe von Steuerdaten durch den Nutzer zur Änderung des Betriebszustands der Werkzeugmaschine.

Durch diese Eingabeeinrichtung ergibt sich der Vorteil, dass der Nutzer manuell Steuerbefehle eingeben kann, die dann im Rahmen der Gesamtsimulation wiedergegeben werden. Beispielsweise kann er virtuell die Tür der Werkzeugmaschinenkammer öffnen, kann Kopf und Spindel manuell verfahren oder kann die Kühlmittelzufuhr starten oder beenden. Diese Funktionalität ermöglicht es, Bedienungspersonal für CNC-Maschinen zu schulen. Im Lernvorgang können die Lernenden die Werkzeugmaschine nicht beschädigen, weil sie nur simuliert wird. Dennoch ist das virtuelle Abbild der Werkzeugmaschine realistisch. Alle manuellen Eingaben, die ein Benutzer an einer realen Werkzeugmaschine eingeben würde oder müsste, können auch an der simulierten Werkzeugmaschine eingegeben werden. So wird eine sehr realistische, aber dennoch kostengünstige und risikofreie Schulung möglich.

Vorzugsweise umfasst die Eingabeeinrichtung eine Override-Eingabeeinrichtung zur Eingabe eines Overrides als Verhältnis zwischen der Vorschubs- bzw. Drehgeschwindigkeit gemäß dem CNC-Teileprogramm und der veränderten Vorschubs- bzw. Drehgeschwindigkeit bei Ausführung des CNC-Teileprogramms an der Werkzeugmaschine. Mit dieser Override-Eingabeeinrichtung wird der Override-Drehknopf einer realen Werkzeugmaschine nachempfunden. Mit Hilfe dieses Override-Drehknopfes lässt ein Benutzer einer CNC-Werkzeugmaschine ein neu installiertes CNC-Teileprogramm zunächst langsamer ablaufen, um den Ablauf so besser kontrollieren zu können und gegebenenfalls Kollisionen verhindern zu können.

Weiterhin umfasst die Eingabeeinrichtung eine manuelle Verfahrwegs-Eingabeeinrichtung zur Eingabe von Steuerdaten zum manuellen Verfahren von Spindel, Kopf und/oder Tisch. Mit Hilfe dieser manuellen Verfahrwegs-Eingabeeinrichtung kann der Benutzer der Simulation wie an einer realen Werkzeugmaschine die Spindel, den Kopf und/oder den Tisch manuell verfahren. Auch in dieser Hinsicht bildet die Simulation also eine reale Werkzeugmaschine realistisch ab.

Weiterhin kann die Eingabeeinrichtung eine Einspann-Eingabeeinrichtung umfassen zur Eingabe von Steuerdaten zum Einspannen von Werkstücken. Diese Einspann-Eingabeeinrichtung ermöglicht es dem Benutzer der Simulation, das Einspannen von Werkstücken zu üben und das virtuelle Abbild der Werkzeugmaschine vorzubereiten für den Ablauf eines CNC-Teileprogramms.

Zusätzlich umfasst die Eingabeeinrichtung vorzugsweise eine Nullpunkt-Festlegungseingabeeinrichtung zum Festlegen eines Nullpunkts. Mit Hilfe dieser Nullpunkt-Festlegungseingabeeinrichtung kann der Benutzer der Simulation wie an einer realen Werkzeugmaschine Nullpunkte festlegen. Insbesondere spielt die Festlegung eines Werkstücknullpunktes in der betrieblichen Praxis eine große Rolle. Mit Hilfe der Nullpunkt-Festlegungseingabeeinrichtung kann das Festlegen von Nullpunkten vom Benutzer geübt werden.

Weiterhin umfasst die Eingabeeinrichtung in einer vorteilhaften Ausführungsform eine Einschaltprozedur-Eingabeeinrichtung zur manuellen Eingabe von Steuerdaten, die nach dem Einschalten einer realen Werkzeugmaschine vom Bediener der Werkzeugmaschine einzugeben sind, um einen betriebsbereiten Betriebszustands der Werkzeugmaschine zu erreichen. Mit Hilfe dieser Einschaltprozedur-Eingabeeinrichtung können sämtliche manuellen Eingaben vorgenommen werden, die an einer realen Werkzeugmaschine notwendig sind, um nach dem Einschalten der Werkzeugmaschine die Werkzeugmaschine in einen betriebsbereiten Zustand zu bringen. Zu diesen Einschaltvorgängen können zum Beispiel gehören das Öffnen und Schließen der Tür, um ein Werkstück einlegen zu können, das Einspannen von Werkstücken etc.

In einer bevorzugten Ausführungsform umfasst die Eingabeeinrichtung ein reales Bedienpult einer realen Werkzeugmaschine, das vorzugsweise ein CNC-Bedienfeld und/oder ein PLC-Bedienfeld umfasst. Durch die erfindungsgemäße Kombination des realen Bedienpults einerseits und der durch die erfindungsgemäße Simulationsvorrichtung ermöglichten ganzheitlichen Simulation der Bearbeitungsvorgänge andererseits kann dem Nutzer eine Realitätsnähe suggeriert werden, die bislang nicht ansatzweise erreicht werden konnte, da er unmittelbar den Eindruck erhält, dass er an einer realen Werkzeugmaschine arbeitet. Dadurch wird beispielsweise eine realistische Schulung möglich.

Weiterhin kann die Eingabeeinrichtung ein virtuelles Bedienpult als virtuelles Abbild eines realen Bedienpults umfassen. Das virtuelle Bedienpult ist vorzugsweise durch eine angeschlossene Maus oder über einen drucksensitiven Monitor bedienbar. Durch das virtuelle Bedienpult kann auch für die Benutzer, die sich kein reales Bedienpult kaufen wollen, eine realistische Bediensituation geschaffen werden.

Vorzugsweise kann die PLC-Steuereinrichtung PLC-Steuerungs-Ausgangsdaten in Abhängigkeit von den Steuerdaten erzeugen. Dies hat den Vorteil, dass über die Eingabeeinrichtung eingegebene Steuerdaten, wie zum Beispiel der Befehl, die Tür der Werkzeugmaschinenkammer zu öffnen, von der PLC-Steuereinrichtung ausgeführt werden können.

Die PLC-Steuereinrichtung wird jedoch nicht nur dann aktiv, wenn sie Steuerdaten direkt ausführt, sondern häufiger ist vielmehr die Situation, dass die CNC-Steuereinrichtung das CNC-Teileprogramm ausführt und dabei die Ausführung einiger Befehle an die PLC-Steuereinrichtung delegiert.

In einer bevorzugten Ausführungsform ist die erfindungsgemäße Vorrichtung dazu eingerichtet, über die Eingabeeinrichtung die Auswahl eines Satzes innerhalb des CNC-Teileprogramms zu ermöglichen, wobei die Gesamtsimulationseinrichtung die Gesamtsimulationsdaten vom Anfang des CNC-Teileprogramms an erzeugt und die Visualisierungseinrichtung ab dem ausgewählten Satz die Simulationsdaten visualisiert, um so den Ablauf zur Bearbeitung eines Werkstücks an der Werkzeugmaschine ab dem ausgewählten Satz darzustellen.

In dieser bevorzugten Ausführungsform kann also über die Eingabeeinrichtung ein Satz innerhalb des CNC-Teileprogramms ausgewählt werden. Damit signalisiert der Benutzer, dass er den Bewegungsablauf ab diesem Satz sehen möchte. Damit eine Visualisierung an dieser Stelle starten kann, ist es notwendig, dass zunächst der Zustand hergestellt wird, den die Werkzeugmaschine an diesem Punkt in dem Teileprogramm besitzen würde. Deswegen wird in einer Art Schnelldurchlauf das Teileprogramm von Anfang an durchlaufen. Die Visualisierung startet allerdings erst ab dem ausgewählten Satz. Diese Möglichkeit, die Visualisierung an auswählbaren Sätzen zu beginnen, eröffnet neue didaktische Möglichkeiten im Bereich der Schulung.

Vorzugsweise umfasst die Anzeigeeinrichtung eine reale CNC-Anzeigeeinrichtung einer realen Werkzeugmaschine. Dadurch wird das Gefühl des Benutzers, an einer realen Werkzeugmaschine zu stehen, weiter verstärkt. Eine realistischere Schulung wird ermöglicht.

Zusätzlich kann die Anzeigeeinrichtung eine virtuelle CNC-Anzeigeeinrichtung als virtuelles Abbild einer realen CNC-Anzeigeeinrichtung einer realen Werkzeugmaschine umfassen. Dies bedeutet, dass eine reale CNC-Anzeigeeinrichtung auf einem handelsüblichen Bildschirm nachgeahmt wird. Hierdurch wird eine realistische Schulungssituation geschaffen, auch wenn keine reale CNC-Anzeigeeinrichtung zur Verfügung steht.

Vorzugsweise ist die Visualisierungseinrichtung dazu eingerichtet, die Gesamtsimulationsdaten dreidimensional zu visualisieren. Dadurch wird ein realistischer Eindruck geschaffen.

In einer bevorzugten Ausführungsform umfasst die erste Speichereinrichtung eine Einrichtung zur Speicherung von Kinematikdaten zur Beschreibung des kinematischen Verhaltens der Werkzeugmaschine. In den Kinematikdaten befinden sich Informationen, die beschreiben, wie sich die Werkzeugmaschine in Bewegung verhält. Die Kinematikdaten können beispielsweise Ausführungszeiten für gewisse Bewegungsabläufe enthalten.

Weiterhin kann die erste Speichereinrichtung eine Einrichtung zur Speicherung von Werkzeugmaschinenelementdaten zur Erzeugung eines virtuellen Abbilds von Werkzeugmaschinenelementen umfassen. Darüber hinaus kann die erste Speichereinrichtung eine Einrichtung zur Speicherung von Konfigurationsdaten zur Erzeugung eines virtuellen Abbilds der Werkzeugmaschine in Abhängigkeit der Werkzeugmaschinenelementdaten, der Kinematikdaten und der Konfigurationsdaten umfassen.

Durch die Zusammensetzung eines virtuellen Abbilds der Werkzeugmaschine aus einzelnen Werkzeugmaschinenelementen mit Hilfe der Konfigurationsdaten wird es möglich, besonders effizient unterschiedliche Typen von Werkzeugmaschinen darzustellen, weil auch an unterschiedlichen Typen von Werkzeugmaschinen viele Maschinenelemente identisch sind. Die Konfigurationsdaten geben also an, wie vorher festgelegte Maschinenelemente zu kombinieren sind, um so zu einem kompletten Maschinenmodell zu gelangen.

In einer bevorzugten Ausführungsform umfasst die dritte Speichereinrichtung eine Einrichtung zur Speicherung von Werkzeugdaten zur Erzeugung eines virtuellen Abbilds mindestens eines Werkzeugs. Hierdurch ergibt sich der Vorteil, dass die Werkzeuge modelliert werden können, die die Werkzeugmaschine verwendet.

Vorzugsweise umfasst die dritte Speichereinrichtung eine Einrichtung zur Speicherung von Spannmitteldaten zur Erzeugung eines virtuellen Abbilds mindestens eines Spannmittels. Dadurch wird es möglich, dass auch die Spannmittel, in die die Werkstücke eingespannt werden, modellierbar werden.

In einer bevorzugten Ausführungsform umfasst die erfindungsgemäße Vorrichtung eine Parametrierungseinrichtung zur Parametrierung der CNC-Steuerungseinrichtung und/oder der PLC-Steuereinrichtung. Vorzugsweise ist diese Parametrierungseinrichtung dazu eingerichtet, die CNC-Steuereinrichtung und/oder die PLC-Steuereinrichtung hinsichtlich mindestens eines Parameters aus der Gruppe von Verfahrbereichsparameter, Regelverhaltensparameter, Kompensationsparameter und Werkzeugmagazinparameter zu parametrieren. Durch diese Parametrierungseinrichtung wird es möglich, die CNC-Steuereinrichtung und/oder die PLC-Steuereinrichtung wie reale CNC-Steuerungen und/oder PLC-Steuerungen zu parametrieren.

Vorzugsweise erfasst die erfindungsgemäße Vorrichtung eine Schnittstelle zur Kommunikation zwischen der CNC-Steuereinrichtung und der Gesamtsimulationseinrichtung. Diese Schnittstelle kann auf Basis einer Middleware realisiert sein, wie zum Beispiel DCOM oder CORBA (Common Object Request Broker Architecture). Vorzugsweise ist die Schnittstelle zur Kommunikation zwischen der CNC-Steuereinrichtung und der Gesamtsimulationseinrichtung dazu eingerichtet, nicht objektorientierte CNC-Daten, die die Schnittstelle von der CNC-Steuereinrichtung erhält, vor der Übergabe an die Gesamtsimulationseinrichtung in eine objektorientierte Form zu überführen.

Dies ist insbesondere vorteilhaft, weil die Visualisierungseinrichtung vorzugsweise auf Basis von OpenGL realisiert ist. OpenGL ist objektorientiert. Demgegenüber sind viele CNC-Programme gängiger CNC-Steuereinrichtungen in C programmiert, d. h. in einer nicht objektorientierten Sprache. Daher ist eine Überführung nicht objektorientierter CNC-Daten in eine objektorientierte Form notwendig, um die Interoperabilität zwischen der CNC-Steuereinrichtung und der Visualisierungseinrichtung herzustellen.

Vorzugsweise umfasst die Schnittstelle zur Kommunikation zwischen der CNC-Steuereinrichtung und der Gesamtsimulationseinrichtung eine Filtereinrichtung, die die Menge der CNC-Daten, die die CNC-Steuereinrichtung an die Schnittstelle übergibt, filtert, so dass die Gesamtsimulationseinrichtung nur eine Teilmenge aus der Menge der von der CNC-Steuereinrichtung übergebenen CNC-Daten erhält.

Beispielsweise kann die CNC-Steuereinrichtung dazu eingerichtet sein, alle 15 Millisekunden neue CNC-Daten zu liefern. Würden alle CNC-Daten an die Gesamtsimulationseinrichtung übergeben werden, so müsste diese Gesamtsimulationseinrichtung das Werkzeugmaschinenmodell alle 15 Millisekunden aktualisieren. Dieser Rechenaufwand ist in 15 Millisekunden kaum zu bewerkstelligen, so dass eine Simulation in Echtzeit sehr schwierig wird. Durch die Filtereinrichtung wird nur eine Teilmenge der CNC-Daten an die Gesamtsimulationseinrichtung übergeben, beispielsweise werden alle 150 Millisekunden die CNC-Daten an die Gesamtsimulationseinrichtung weitergegeben, d. h. jeder zehnte CNC-Datensatz. Auch, wenn nur jeder zehnte CNC-Datensatz übergeben wird, kann der Bewegungsablauf der Werkzeugmaschine vollständig nachvollzogen werden. Die Gesamtsimulationseinrichtung muss jedoch seltener das Werkzeugmaschinenmodell aktualisieren, so dass ein geringerer Rechenaufwand notwendig ist und eine Simulation in Echtzeit möglich wird.

Vorzugsweise umfasst die erfindungsgemäße Vorrichtung eine Eingabeeinrichtung zur Eingabe von Konfigurationsdaten zur Konfiguration der Filtereinrichtung. Mit Hilfe dieser Eingabeeinrichtung kann beispielsweise bestimmt werden, wie stark die Filtereinrichtung die CNC-Daten filtern soll. Dort kann beispielsweise eingegeben werden, dass jeder fünfte CNC-Datensatz oder auch jeder fünfzehnte CNC-Datensatz an die Gesamtsimulationseinrichtung übergeben werden soll.

Vorzugsweise umfasst die Schnittstelle zur Kommunikation zwischen der CNC-Steuereinrichtung und der Gesamtsimulationseinrichtung eine Synchronisationseinrichtung zur Synchronisation der Kommunikation zwischen der CNC-Steuereinrichtung und der Gesamtsimulationseinrichtung.

In einer bevorzugten Ausführungsform umfasst die erfindungsgemäße Vorrichtung eine Schnittstelle zur Kommunikation zwischen der PLC-Steuereinrichtung und der PLC-Ablaufsimulationseinrichtung. Vorzugsweise ist diese Schnittstelle dazu eingerichtet, eine Synchronisation zwischen der PLC-Steuereinrichtung und der PLC-Ablaufsimulationseinrichtung mit Hilfe eines Semaphors zu ermöglichen. Die Schnittstelle kann eine Synchronisationseinrichtung mit einer Speichereinrichtung umfassen, die sicherstellt, dass die PLC-Steuereinrichtung alle in einer Periode erzeugten PLC-Steuerungsausgangsdaten in die Speichereinrichtung schreibt, bevor die PLC-Ablaufsimulationseinrichtung die PLC-Steuerungsausgangsdaten aus der Speichereinrichtung ausliest. Genauso kann die Schnittstelle eine Synchronisationseinrichtung mit einer Speichereinrichtung umfassen, die sicherstellt, dass die PLC-Ablauf simulationseinrichtung alle in einer Periode erzeugten PLC-Steuerungs-Eingangsdaten in die Speichereinrichtung schreibt, bevor die PLC-Steuereinrichtung die PLC-Steuerungseingangsdaten aus der Speichereinrichtung ausliest.

Auf diese Weise wird sichergestellt, dass die PLC-Steuereinrichtung immer erst einen kompletten Satz an PLC-Steuerungsausgangsdaten schreibt, bevor die PLC-Ablaufsimulationseinrichtung diese ausliest. Es wird also eine Atomizität aller Ausgangsdaten einer Periode erreicht. Dies ist wünschenswert, um das Verhalten einer realen PLC-Steuereinrichtung noch realistischer abzubilden. Auch in der entgegengesetzten Richtung wird erreicht, dass die PLC-Ablaufsimulationseinrichtung jeweils einen kompletten Satz an PLC-Steuerungseingangsdaten erzeugt und in die Speichereinrichtung schreibt, bevor die PLC-Steuereinrichtung diese ausliest. Auch hier wird wieder eine Atomizität aller PLC-Steuerungseingangsdaten einer Periode erreicht.

In einer bevorzugten Ausführungsform umfasst die erfindungsgemäße Vorrichtung eine Schnittstelle zur Kommunikation zwischen der Gesamtsimulationseinrichtung und der PLC-Ablaufsimulationseinrichtung. Diese kann auf Basis einer Middleware realisiert sein. Vorzugsweise umfasst diese Schnittstelle zur Kommunikation zwischen der Gesamtsimulationseinrichtung und der PLC-Ablaufsimulationseinrichtung eine Filtereinrichtung, die die Menge der PLC-Daten, die die PLC-Ablaufsimulationseinrichtung an die Schnittstelle übergibt, filtert, so dass die Gesamtsimulationseinrichtung nur eine Teilmenge aus der Menge der von der PLC-Ablaufsimulationseinrichtung übergebenen PLC-Daten erhält. Auch hier wird wiederum gefiltert, damit die Gesamtsimulationseinrichtung nicht zu häufig das Werkzeugmaschinenmodell aktualisieren muss und so aufgrund des hohen Rechenaufwands eine Simulation in Echtzeit erschwert wird. Vorzugsweise kann auch diese Filtereinrichtung wiederum über eine Eingabeeinrichtung konfiguriert werden, so dass einstellbar ist, wie stark die Filtereinrichtung die PLC-Daten filtert. Vorzugsweise umfasst die Schnittstelle zur Kommunikation zwischen der Gesamtsimulationseinrichtung und der PLC-Ablaufsimulationseinrichtung eine Synchronisationseinrichtung zur Synchronisation der Kommunikation zwischen der Gesamtsimulationseinrichtung und der PLC-Ablaufsimulationseinrichtung.

Alle genannten Schnittstellen können als eine entfernte Schnittstelle ausgestaltet sein. Eine entfernte Schnittstelle ist dazu eingerichtet, eine entfernte Kommunikation zwischen Kommunikationspartnern, die sich an unterschiedlichen Orten befinden, zu ermöglichen. Dadurch wird eine Verteilung der einzelnen Einrichtungen auf mehrere Computer möglich. Beispielsweise kann es vorteilhaft sein, die Gesamtsimulationseinrichtung und die Visualisierungseinrichtung auf einem ersten Computer ablaufen zu lassen, während die PLC-Steuereinrichtung, die CNC-Steuereinrichtung und die PLC-Ablaufsimulation auf einem zweiten Computer ausgeführt werden. Dies ist vorteilhaft, weil die Gesamtsimulationseinrichtung und die Visualisierungseinrichtung sehr viel Rechenkapazität benötigen. Dadurch also, dass die Schnittstelle zwischen der PLC-Ablaufsimulationseinrichtung und der Gesamtsimulationseinrichtung sowie die Schnittstelle zwischen der CNC-Steuereinrichtung und der Gesamtsimulationseinrichtung als eine entfernte Schnittstelle ausgestaltet werden, kann eine schnellere Ausführung der Gesamtsimulation erreicht werden.

Weiterhin können alle genannten Schnittstellen den Aufruf von Methoden ermöglichen, die ein Kommunikationspartner dem anderen Kommunikationspartner zur Verfügung stellt. Dadurch wird es möglich, dass die einzelnen Einrichtungen nicht nur Daten untereinander austauschen, sondern gegenseitig ihre Methoden benutzen.

Vorzugsweise umfasst die erfindungsgemäße Vorrichtung eine Kollisionserkennungseinrichtung, die dazu eingerichtet ist, in Abhängigkeit der Gesamtsimulationsdaten Kollisionen zwischen der Werkzeugmaschine einschließlich den Betriebsmitteln und dem Werkstück zu erkennen. Auf diese Weise ist es möglich, CNC-Teileprogramme oder auch manuell eingegebene Steuerdaten daraufhin zu prüfen, ob sie zu Kollisionen führen. Zu den Betriebsmitteln gehören insbesondere die verwendeten Werkzeuge.

In einer bevorzugten Ausführungsform umfasst die erfindungsgemäße Vorrichtung eine Verfahrbereichsprüfungseinrichtung zur Prüfung, ob eine vorherbestimmte Position von der Werkzeugmaschine angefahren werden kann. Die vorherbestimmte Position kann sich beispielsweise aus dem CNC-Teileprogramm ergeben oder sie kann manuell eingegeben worden sein. Mit Hilfe der Verfahrbereichsprüfungseinrichtung kann beispielsweise herausgefunden werden, ob ein spezifiziertes Werkstück auf einer bestimmten Werkzeugmaschine gefertigt werden kann. Dies ermöglicht es, die erfindungsgemäße Vorrichtung zur Vertriebsunterstützung einzusetzen. Vertriebsmitarbeiter können Kunden, die beabsichtigen, eine Werkzeugmaschine zu kaufen, die Werkzeugmaschine virtuell vorführen, beispielsweise auf ihrem Laptop, und können dem Kunden visualisieren, wie die gewünschten Werkstücke von dieser Werkzeugmaschine hergestellt werden können und es kann eine Prüfung erfolgen, ob die Werkzeugmaschine groß genug ist und dafür geeignet ist, das gewünschte Werkstück herzustellen.

In einer bevorzugten Ausführungsform ist die Visualisierungseinrichtung dazu eingerichtet, die Gesamtsimulationsdaten in einer Geschwindigkeit darzustellen, die während einer vorbestimmten Zeitperiode in einem konstanten Verhältnis zur Geschwindigkeit des realen Ablaufs zur Bearbeitung eines Werkstücks an einer Werkzeugmaschine steht. Insbesondere kann die Visualisierungseinrichtung dazu eingerichtet sein, die Simulationsdaten in Echtzeit darzustellen. Auf diese Weise können Abläufe zur Bearbeitung eines Werkstücks an einer Werkzeugmaschine realistisch visualisiert werden, so dass der Betrachter einen realistischen Eindruck davon erhält, wie die Bearbeitung eines Werkstücks an einer Werkzeugmaschine in der Realität ablaufen würde.

Vorzugsweise ist die Einrichtung zur Bereitstellung von Steuerdaten dazu eingerichtet, Steuerdaten zur Ausführung eines Ablaufs zur Bearbeitung eines Werkstücks an einer Fünf-Achs-Werkzeugmaschine bereitzustellen. Für Fünf-Achs-Werkzeugmaschinen ist die Visualisierung von Bearbeitungsabläufen besonders vorteilhaft, weil es durch die fünf Achsen besonders schwierig ist für einen Benutzer, sich den Bearbeitungsablauf vorzustellen.

In einer bevorzugten Ausführungsform ist die erfindungsgemäße Vorrichtung dazu eingerichtet, in einer ersten Zeitperiode einen Ablauf zur Bearbeitung eines Werkstücks an einer ersten Werkzeugmaschine und in einer zweiten Zeitperiode einen Ablauf zur Bearbeitung eines Werkstücks an einer zweiten Werkzeugmaschine zu simulieren.

Erfindungsgemäß kann dies dadurch erreicht werden, dass die CNC-Steuereinrichtung und die PLC-Steuereinrichtung, die sich auf eine erste Werkzeugmaschine beziehen, komplett, d.h. insbesondere einschließlich des CNC-Programms, des PLC-Programms und der Parameter, durch eine CNC-Steuereinrichtung und eine PLC-Steuereinrichtung, die sich auf eine zweite Werkzeugmaschine beziehen, ersetzt werden. Dadurch wird es beispielsweise möglich, dass im ersten Fall eine Siemens-Steuerung und im zweiten Fall eine Heidenhain-Steuerung verwendet bzw. abgebildet wird. Somit werden unterschiedliche Werkzeugmaschinen und/oder unterschiedliche Werkzeugmaschinensteuerungen simulierbar. Dies führt beispielsweise zu dem Vorteil, dass Auszubildende einfach und kostengünstig durch die Simulationsvorrichtung an mehreren Werkzeugmaschinen und mehreren Werkzeugmaschinensteuerungen geschult werden können.

Alternativ kann die Simulierbarkeit unterschiedlicher Werkzeugmaschinen dadurch erreicht werden, dass das PLC-Programm und die Parametrierung der CNC-Steuereinrichtung ausgetauscht werden können. Dadurch ist es beispielsweise möglich, unterschiedliche Werkzeugmaschinen desselben Werkzeugmaschinenherstellers, wie z.B. Deckel-Maho-Gildemeister, einfach und kostengünstig zu simulieren.

Vorzugsweise umfasst die erfindungsgemäße Vorrichtung eine Steuerungs-Auswahleinrichtung zum Auswählen einer Steuerung, die im Rahmen der Simulation eines Ablaufs zur Bearbeitung eines Werkstücks an einer Werkzeugmaschine verwendet werden soll. Eine Steuerung kann beispielsweise durch Auswahl einer entsprechenden CNC-Steuereinrichtung und einer entsprechenden PLC-Steuereinrichtung oder durch die Auswahl eines entsprechenden PLC-Programms und entsprechender Parameter ausgewählt werden. Dadurch kann ein Benutzer der Simulationseinrichtung komfortabel eine Steuerung auswählen und auf der Basis der ausgewählten Steuerung einen Ablauf zur Bearbeitung eines Werkstücks an einer Werkzeugmaschine simulieren.

Die erfindungsgemäße Vorrichtung weist viele Vorteile auf. Sie erlaubt eine realistische Simulation einer Werkzeugmaschine. Dadurch können besser Kollisionen erkannt werden. Insbesondere können auch solche Kollisionen erkannt werden, die durch PLC-Bewegungsabläufe verursacht werden würden. Durch die ganzheitliche Simulation, das heißt, die Einbeziehung aller Aspekte der Werkzeugmaschine in die Simulation, wird eine bessere Vorhersage von Maschinenbelegungszeiten möglich. Benutzer der Werkzeugmaschine können mit Hilfe der Simulation geschult werden. Schulungsunternehmen müssen sich nicht mehr unbedingt eine reale Werkzeugmaschine kaufen, sondern können die Simulation verwenden. Dies verringert den Kapitaleinsatz. Gleichzeitig ist es möglich, mit Hilfe der Simulation unterschiedliche Werkzeugmaschinen und unterschiedliche Steuerungen unterschiedlicher Steuerungshersteller zu simulieren. Die Beschädigung von Werkzeugmaschinen durch unerfahrene Nutzer wird verhindert, weil die virtuelle Werkzeugmaschine der Simulation nicht beschädigt werden kann. Zusätzlich kann die Simulation zur Vertriebsunterstützung verwendet werden. Werkzeugmaschinen können den Kunden, die gegebenenfalls eine Werkzeugmaschine kaufen wollen, beispielsweise auf einem Laptop visualisiert werden. Darüber hinaus können aus den Simulationsergebnissen Rückschlüsse für die Konstruktion von Werkzeugmaschinen gezogen werden. Dadurch ist eine stetige Verbesserung der Werkzeugmaschinen möglich. Gleichzeitig können am Modell neue Ideen für die Konstruktion von Werkzeugmaschinen gefahrlos ausprobiert werden.

Weiterhin umfasst die Erfindung ein Verfahren zur Simulation eines Ablaufs zur Bearbeitung eines Werkstücks an einer Werkzeugmaschine. Erfindungsgemäß umfasst das Verfahren die Schritte Bereitstellen von Werkzeugmaschinendaten zur Erzeugung eines virtuellen Abbilds einer Werkzeugmaschine, Bereitstellen von Werkstückdaten zur Erzeugung eines virtuellen Abbilds mindestens eines Werkstücks, Bereitstellen von Betriebsmitteldaten zur Erzeugung eines virtuellen Abbilds mindestens eines Betriebsmittels, Bereitstellen von Steuerdaten zur Ausführung eines Ablaufs im Zusammenhang mit der Bearbeitung eines Werkstücks an einer Werkzeugmaschine, Erzeugen von CNC-Daten in Abhängigkeit der Steuerdaten, Erzeugen von PLC-Steuerungs-Ausgangsdaten, Erzeugen von PLC-Simulationsdaten und von PLC-Steuerungs-Eingangsdaten in Abhängigkeit der PLC-Steuerungs-Ausgangsdaten und der Werkzeugmaschinendaten, Erzeugen von Gesamtsimulationsdaten betreffend den Ablaufs zur Bearbeitung eines Werkstücks an der Werkzeugmaschine in Abhängigkeit von den CNC-Daten, den PLC-Simulationsdaten, den Werkzeugmaschinendaten, den Werkstückdaten und den Betriebsmitteldaten und Visualisieren der Gesamtsimulationsdaten, umfassend den Schritt Darstellen des Ablaufs zur Bearbeitung eines Werkstücks an der Werkzeugmaschine.

Dieses erfindungsgemäße Verfahren zur Simulation eines Ablaufs zur Bearbeitung eines Werkstücks an einer Werkzeugmaschine bietet dieselben Vorteile wie die erfindungsgemäße Vorrichtung.

Vorzugsweise umfasst das Verfahren den Schritt Erzeugen eines CNC-Programms aus dem Quellcode eines CNC-Programms einer realen CNC-Steuerung. Das Verfahren kann weiterhin den Schritt Bereitstellen eines PLC-Programms einer realen PLC-Steuerung oder den Schritt Erzeugen eines PLC-Programms aus dem Quellcode eines PLC-Programms einer realen PLC-Steuerung umfassen.

Erfindungsgemäß umfasst der Schritt Bereitstellen von Steuerdaten den Schritt Bereitstellen eines CNC-Teileprogramms, wobei das CNC-Teileprogramm auf einer realen Werkzeugmaschine ausführbar ist.

Erfindungsgemäß umfasst der Schritt Bereitstellen von Steuerdaten den Schritt manuelles Eingeben von Steuerdaten durch den Nutzer zur Änderung des Betriebszustands der Werkzeugmaschine.

Der Schritt manuelles Eingeben von Steuerdaten umfasst den Schritt Eingeben von Steuerdaten zum manuellen Verfahren von Spindel, Kopf und/oder Tisch.

Der Schritt manuelles Eingeben von Steuerdaten kann den Schritt Eingeben eines Overrides als Verhältnis zwischen der Vorschubsgeschwindigkeit gemäß dem CNC-Teileprogramm und der veränderten Vorschubsgeschwindigkeit bei Ausführung des CNC-Teileprogramms an der Werkzeugmaschine umfassen.

Vorzugsweise umfasst der Schritt manuelles Eingeben von Steuerdaten auch den Schritt Eingeben von Steuerdaten zum Einspannen von Werkstücken.

In einer besonders bevorzugten Ausführungsform umfasst der Schritt manuelles Eingeben von Steuerdaten den Schritt Eingeben von Steuerdaten zum Festlegen eines Nullpunkts.

Vorzugsweise umfasst der Schritt manuelles Eingeben von Steuerdaten den Schritt Eingeben von Steuerdaten, die nach dem Einschalten einer realen Werkzeugmaschine vom Bediener der Werkzeugmaschine einzugeben sind, um einen betriebsbereiten Betriebszustands der Werkzeugmaschine zu erreichen.

In einer vorteilhaften Ausführungsform erfolgen in dem Schritt manuelles Eingeben von Steuerdaten die Eingaben über ein reales Bedienpult einer realen Werkzeugmaschine, das ein CNC-Bedienfeld und/oder ein PLC-Bedienfeld umfasst.

Genauso können in dem Schritt manuelles Eingeben von Steuerdaten die Eingaben über ein virtuelles Bedienpult als virtuelles Abbild eines realen Bedienpults erfolgen.

In dem Schritt Erzeugen von PLC-Steuerungs-Ausgangsdaten werden PLC-Steuerungs-Ausgangsdaten in Abhängigkeit von den Steuerdaten erzeugt.

In einer vorteilhaften Ausführungsform umfasst das Verfahren die Schritte Eingeben einer Auswahl eines Satzes innerhalb des CNC-Teileprogramms, Erzeugen von Gesamtsimulationsdaten vom Anfang des CNC-Teileprogramms an und Visualisieren der Gesamtsimulationsdaten ab dem ausgewählten Satz, um so den Ablauf zur Bearbeitung eines Werkstücks an der Werkzeugmaschine ab dem ausgewählten Satz darzustellen.

Vorzugsweise erfolgt in dem Schritt Darstellen des Ablaufs zur Bearbeitung eines Werkstücks an der Werkzeugmaschine das Darstellen über eine reale CNC-Anzeigeeinrichtung einer realen Werkzeugmaschine.

Alternativ oder zusätzlich kann in dem Schritt Darstellen des Ablaufs zur Bearbeitung eines Werkstücks an der Werkzeugmaschine das Darstellen über eine virtuelle CNC- Anzeigeeinrichtung als virtuelles Abbild einer realen CNC-Anzeigeeinrichtung einer realen Werkzeugmaschine erfolgen.

In dem Schritt Visualisieren der Gesamtsimulationsdaten werden die Gesamtsimulationsdaten dreidimensional visualisiert.

Der Schritt Bereitstellen von Werkzeugmaschinendaten kann den Schritt Bereitstellen von Kinematikdaten zur Beschreibung des kinematischen Verhaltens der Werkzeugmaschine umfassen. Ebenso kann der Schritt Bereitstellen von Werkzeugmaschinendaten den Schritt Bereitstellen von Werkzeugmaschinenelementdaten zur Erzeugung eines virtuellen Abbilds von Werkzeugmaschinenelementen umfassen. Vorzugsweise umfasst der Schritt Bereitstellen von Werkzeugmaschinendaten den Schritt Bereitstellen von Konfigurationsdaten zur Erzeugung eines virtuellen Abbilds der Werkzeugmaschine in Abhängigkeit der Werkzeugmaschinenelementdaten, der Kinematikdaten und der Konfigurationsdaten.

Der Schritt Bereitstellen von Betriebsmitteldaten umfasst den Schritt Bereitstellen von Werkzeugdaten zur Erzeugung eines virtuellen Abbilds mindestens eines Werkzeugs und den Schritt Bereitstellen von Spannmitteldaten zur Erzeugung eines virtuellen Abbilds mindestens eines Spannmittels umfassen.

In einer bevorzugten Ausführungsform umfasst das erfindungsgemäße Verfahren den Schritt Parametrieren des Schritts Erzeugen von CNC-Daten und/oder des Schritts Erzeugen von PLC-Steuerungs-Ausgangsdaten.

Vorzugsweise erfolgt in dem Schritt Parametrieren des Schritts Erzeugen von CNC-Daten und/oder des Schritts Erzeugen von PLC-Steuerungs-Ausgangsdaten eine Parametrierung hinsichtlich mindestens eines Parameters aus der Gruppe von Verfahrbereichsparameter, Regelverhaltenparameter, Kompensationsparameter und Werkzeugmagazinparameter.

In einer bevorzugten Ausführungsform umfasst das erfindungsgemäße Verfahren den Schritt Kommunizieren von CNC-Daten von einer CNC-Steuereinrichtung an eine Gesamtsimulationseinrichtung.

Vorzugsweise wird in dem Schritt Kommunizieren von CNC-Daten von einer CNC-Steuereinrichtung an eine Gesamtsimulationseinrichtung über eine Middleware kommuniziert.

Der Schritt Kommunizieren von CNC-Daten von der CNC-Steuereinrichtung an die Gesamtsimulationseinrichtung kann den Schritt Überführen von nicht-objektorientierten CNC-Daten in eine objektorientierte Form umfassen.

Vorzugsweise umfasst der Schritt Kommunizieren von CNC-Daten von der CNC-Steuereinrichtung an die Gesamtsimulationseinrichtung den Schritt Filtern der Menge der CNC-Daten, so dass die Gesamtsimulationseinrichtung nur eine Teilmenge aus der Menge der von der CNC-Steuereinrichtung kommunizierten CNC-Daten erhält. Das erfindungsgemäße Verfahren kann den Schritt Konfigurieren des Schritts Filtern der Menge der CNC-Daten durch Eingeben von Konfigurationsdaten umfassen.

In einer bevorzugten Ausführungsform umfasst das erfindungsgemäße Verfahren den Schritt Kommunizieren von PLC-Steuerungs-Ausgangsdaten und PLC-Steuerungs-Eingangsdaten zwischen einer PLC-Steuereinrichtung und einer PLC-Ablaufsimulationseinrichtung.

Der Schritt Kommunizieren von PLC-Steuerungs-Ausgangsdaten und PLC-Steuerungs-Eingangsdaten zwischen der PLC-Steuereinrichtung und der PLC-Ablaufsimulationseinrichtung kann den Schritt Synchronisieren der PLC-Steuereinrichtung und der PLC-Ablaufsimulationseinrichtung mit Hilfe eines Semaphors umfassen.

Vorzugsweise schreibt in dem Schritt Kommunizieren von PLC-Steuerungs-Ausgangsdaten und PLC-Steuerungs-Eingangsdaten zwischen der PLC-Steuereinrichtung und der PLC-Ablaufsimulationseinrichtung die PLC-Steuereinrichtung alle in einer Periode erzeugten PLC-Steuerungs-Ausgangsdaten in eine Speichereinrichtung, bevor die PLC-Ablauf simulationseinrichtung die PLC-Steuerungs-Ausgangsdaten aus der Speichereinrichtung ausliest.

Vorzugsweise schreibt in dem Schritt Kommunizieren von PLC-Steuerungs-Ausgangsdaten und PLC-Steuerungs-Eingangsdaten zwischen der PLC-Steuereinrichtung und der PLC-Ablaufsimulationseinrichtung die PLC-Ablaufsimulationseinrichtung alle in einer Periode erzeugten PLC-Steuerungs-Eingangsdaten in die Speichereinrichtung, bevor die PLC-Steuereinrichtung die PLC-Steuerungs-Eingangsdaten aus der Speichereinrichtung ausliest.

In einer bevorzugten Ausführungsform umfasst das erfindungsgemäße Verfahren den Schritt Kommunizieren von PLC-Simulationsdaten zwischen der PLC-Ablaufsimulationseinrichtung und der Gesamtsimulationseinrichtung.

Vorzugsweise wird in dem Schritt Kommunizieren von PLC-Simulationsdaten zwischen der PLC-Ablaufsimulationseinrichtung und der Gesamtsimulationseinrichtung über eine Middleware kommuniziert wird.

Der Schritt Kommunizieren von PLC-Simulationsdaten zwischen der PLC-Ablaufsimulationseinrichtung und der Gesamtsimulationseinrichtung kann den Schritt Filtern der Menge der PLC-Simulationsdaten, so dass die Gesamtsimulationseinrichtung nur eine Teilmenge aus der Menge der von der PLC-Ablaufsimulationseinrichtung kommunizierten PLC-Simulationsdaten erhält, umfassen.

Vorzugsweise erfolgt in mindestens einem der Kommunikationsschritte eine entfernte Kommunikation zwischen Kommunikationspartnern, die sich an unterschiedlichen Orten befinden.

Vorzugsweise umfasst mindestens einer der Kommunikationsschritte den Schritt Aufrufen einer Methode, die ein Kommunikationspartner dem anderen Kommunikationspartner zur Verfügung stellt.

In einer vorteilhaften Ausführungsform umfasst das erfindungsgemäße Verfahren den Schritt Erkennen von Kollisionen zwischen der Werkzeugmaschine einschließlich der Betriebsmittel und dem Werkstück in Abhängigkeit der Gesamtsimulationsdaten.

Weiterhin kann das erfindungsgemäße Verfahren den Schritt Prüfen, ob eine vorherbestimmte Position von der Werkzeugmaschine angefahren werden kann, umfassen.

Vorzugsweise werden in dem Schritt Visualisieren der Gesamtsimulationsdaten die Gesamtsimulationsdaten in einer Geschwindigkeit dargestellt, die während einer vorbestimmten Zeitperiode in einem konstanten Verhältnis zur Geschwindigkeit des realen Ablaufs zur Bearbeitung eines Werkstücks an einer Werkzeugmaschine steht.

Vorzugsweise werden in dem Schritt Visualisieren der Gesamtsimulationsdaten die Gesamtsimulationsdaten in Echtzeit dargestellt.

In einer besonders vorteilhaften Ausführungsform werden in dem Schritt Bereitstellen von Steuerdaten Steuerdaten zur Ausführung eines Ablaufs zur Bearbeitung eines Werkstücks an einer 5-Achswerkzeugmaschine bereitgestellt.

In einer bevorzugten Ausführungsform umfasst das erfindungsgemäße Verfahren den Schritt Bereitstellen einer ersten CNC-Steuereinrichtung und einer ersten PLC-Steuereinrichtung zur Simulation eines Ablauf zur Bearbeitung eines Werkstücks an einer ersten Werkzeugmaschine und Bereitstellen einer zweiten CNC-Steuereinrichtung und einer zweiten PLC-Steuereinrichtung zur Simulation eines Ablauf zur Bearbeitung eines Werkstücks an einer zweiten Werkzeugmaschine. Weiterhin kann das erfindungsgemäße Verfahren den Schritt Bereitstellen eines ersten PLC-Programms und erster Parameter zur Parametrierung der CNC-Steuereinrichtung zur Simulation eines Ablauf zur Bearbeitung eines Werkstücks an einer ersten Werkzeugmaschine und Bereitstellen eines zweiten PLC-Programms und zweiter Parameter zur Parametrierung der CNC-Steuereinrichtung zur Simulation eines Ablauf zur Bearbeitung eines Werkstücks an einer zweiten Werkzeugmaschine umfassen. Vorzugsweise umfasst das erfindungsgemäße Verfahren den Schritt Auswählen einer Steuerung, die im Rahmen der Simulation eines Ablaufs zur Bearbeitung eines Werkstücks an einer Werkzeugmaschine verwendet werden soll.

Weiterhin umfasst die Erfindung ein Computerprogrammprodukt, das ein computerlesbares Medium und ein darin gespeichertes Computerprogramm umfasst, wobei das Computerprogramm in der Form einer Abfolge von Zuständen gespeichert ist, die Befehlen entspricht, die eingerichtet sind von einem Datenverarbeitungsmittel einer Datenverarbeitungseinrichtung verarbeitet zu werden, so dass das erfindungsgemäße Verfahren zur Simulation eines Ablaufs zur Bearbeitung eines Werkstücks an einer Werkzeugmaschine ausgeführt wird.

Die im Rahmen der Beschreibung der erfindungsgemäßen Vorrichtung beschriebene PLC-Ablaufsimulationseinrichtung benötigt Daten über das zeitliche Verhalten der simulierten Werkzeugmaschine, um so die PLC-Abläufe in zeitlicher Hinsicht simulieren zu können. Deswegen umfasst die vorliegende Anmeldung weiterhin ein Verfahren zum Erstellen von PLC-Werkzeugmaschinenablaufdaten, das aus Gründen der Einheitlichkeit nicht beansprucht ist und die Schritte Erstellen einer Sequenz von PLC-Steuerdaten, die mindestens ein PLC-Steuerdatum umfasst, Ermitteln einer Anfangsbedingung und einer Endbedingung für jedes PLC-Steuerdatum der Sequenz, wobei sich die Anfangsbedingung und die Endbedingung auf PLC-Steuerungs-Eingangsdaten beziehen, Bereitstellen einer Messeinheit, die dazu eingerichtet ist, eine Zeitperiode zwischen dem Eintritt der Anfangsbedingung und dem Eintritt der Endbedingung eines jeden PLC-Steuerdatums der Sequenz zu messen, Ausführen der Sequenz von PLC-Steuerdaten an einer realen Werkzeugmaschine durch eine reale PLC-Steuereinheit, wobei die Messeinheit für jedes PLC-Steuerdatum der Sequenz die Zeitperiode zwischen dem Eintritt der Anfangsbedingung und dem Eintritt der Endbedingung misst, Erzeugen von PLC-Werkzeugmaschinenablaufdaten aus den Messdaten der Messeinheit und Speichern der PLC-Werkzeugmaschinenablaufdaten umfasst.

Hintergrund dieses Verfahrens ist, dass eine Werkzeugmaschine Aktoren und Sensoren besitzt. Die Aktoren werden von der PLC-Steuereinrichtung durch PLC-Steuerungsausgangsdaten angesteuert. Von den Sensoren der Werkzeugmaschine erhält die PLC-Steuereinrichtung PLC-Steuerungs-Eingangsdaten zurück. Ziel des Verfahrens zum Erstellen von PLC-Werkzeugmaschinenablaufdaten ist es, Daten zu generieren, die darüber Auskunft geben, wann die Sensoren der-realen Werkzeugmaschine welche PLC-Steuerungseingangsdaten generieren als Reaktion auf PLC-Steuerungsausgangsdaten, mit denen die PLC-Steuereinrichtung die Werkzeugmaschine angesteuert hat.

Der Vorteil des Verfahrens zum Erstellen von PLC-Werkzeugmaschinenablaufdaten besteht darin, dass es möglich ist, mit diesem Verfahren Daten zu generieren, die das reale Verhalten einer Werkzeugmaschine bei der Ausführung von PLC-Steuerbefehlen in zeitlicher Hinsicht abbilden.

Weiterhin umfasst die vorliegende Anmeldung eine PLC-Ablaufsimulationseinrichtung, die eine Einrichtung zum Bereitstellen von PLC-Werkzeugmaschinenablaufdaten, eine Taktungseinrichtung zur Taktung der Ablaufsimulation der Werkzeugmaschine, wobei die PLC-Abläufe der Werkzeugmaschine insbesondere in zeitlicher Hinsicht durch die PLC-Werkzeugmaschinenablaufdaten beschrieben werden, Eingänge zum Empfangen von PLC-Steuerungs-Ausgangsdaten zur Steuerung von Aktoren der Werkzeugmaschine, Ausgänge zur Simulation von Ausgangssignalen von Sensoren der Werkzeugmaschine, eine interne Ablaufsimulationseinrichtung zum Erzeugen von PLC-Simulationsdaten und von PLC-Steuerungs-Eingangsdaten in Abhängigkeit der über die Eingänge empfangenen PLC-Steuerungs-Ausgangsdaten, der PLC-Werkzeugmaschinenablaufdaten und der Taktung und eine Ausgabeeinrichtung zur Ausgabe der PLC-Simulationsdaten und zur Ausgabe der PLC-Steuerungs-Eingangsdaten über die Ausgänge umfasst und ebenfalls nicht beansprucht ist.

Der Vorteil dieser PLC-Ablaufsimulationseinrichtung liegt darin, dass sie es ermöglicht, die PLC-Abläufe, die an einer realen Werkzeugmaschine ablaufen, angemessen, insbesondere in zeitlicher Hinsicht, zu simulieren.

Weiterhin umfasst die Anmeldung ein Computerprogrammprodukt, das ein computerlesbares Medium und ein darin gespeichertes Computerprogramm umfasst, wobei das Computerprogramm in der Form einer Abfolge von Zuständen gespeichert ist, die Befehlen entspricht, die eingerichtet sind von einem Datenverarbeitungsmittel einer Datenverarbeitungseinrichtung verarbeitet zu werden, so dass eine erfindungsgemäße PLC-Ablaufsimulationseinrichtung gebildet wird, das ebenfalls nicht beansprucht ist.

Vorteilhafte Ausgestaltungen und weitere Details der vorliegenden Erfindung werden im Folgenden anhand verschiedener Ausführungsbeispiele mit Bezug auf die Figuren beschrieben.
- Fig. 1: zeigt eine Ausführungsform der erfindungsgemäßen Vorrichtung, so wie sie ein Benutzer vor sich sehen würde.
- Fig. 2: zeigt ein Beispiel für eine visualisierte Werkzeugmaschine.
- Fig. 3: zeigt eine visualisierte Werkzeugmaschine mit einem eingeblendeten virtuellen Bedienpult.
- Fig. 4: zeigt ein Beispiel für die Visualisierung eines Bewegungsablaufs.
- Fig. 5: verdeutlicht, wie realistisch visualisiert wird, was ein Benutzer einer realen Werkzeugmaschine sehen würde.
- Fig. 6: zeigt eine virtuelle CNC-Anzeigeeinrichtung.
- Fig. 7: zeigt eine Ausführungsform der erfindungsgemäßen Vorrichtung als Schema.
- Fig. 8: zeigt einen ersten Teil des erfindungsgemäßen Verfahrens zur Simulation eines Ablaufs zur Bearbeitung eines Werkstücks an einer Werkzeugmaschine.
- Fig. 9: zeigt einen zweiten Teil des erfindungsgemäßen Verfahrens zur Simulation eines Ablaufs zur Bearbeitung eines Werkstücks an einer Werkzeugmaschine.
- Fig. 10: zeigt einen dritten Teil des erfindungsgemäßen Verfahrens zur Simulation eines Ablaufs zur Bearbeitung eines Werkstücks an einer Werkzeugmaschine. Insbesondere wird die Erzeugung von CNC-Daten und von PLC-Simulationsdaten illustriert.
- Fig. 11: zeigt einen vierten Teil des Verfahrens zur Simulation eines Ablaufs zur Bearbeitung eines Werkstücks an einer Werkzeugmaschine. Insbesondere wird die Erzeugung und Visualisierung von Gesamtsimulationsdaten illustriert.
- Fig. 12: zeigt eine Ausführungsform des erfindungsgemäßen Verfahrens zum Erstellen von PLC-Werkzeugmaschinenablaufdaten.
- Fig. 13: zeigt eine Ausführungsform einer erfindungsgemäßen PLC-Ablaufsimulationseinrichtung.
- Fig. 14: zeigt die Benutzerschnittstelle einer Ausführungsform einer erfindungsgemäßen PLC-Ablaufsimulationseinrichtung.

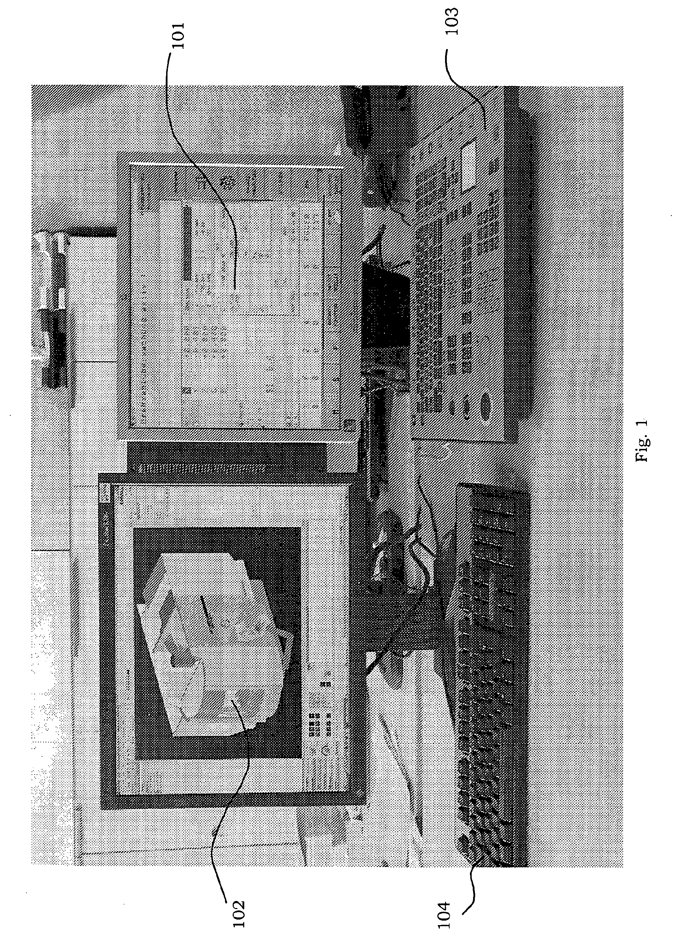

Figur 1 zeigt eine Ausführungsform einer erfindungsgemäßen Vorrichtung. Insbesondere wird illustriert, was ein Benutzer der erfindungsgemäßen Vorrichtung bei der vorliegenden Ausführungsform vor sich sieht. Der Benutzer sieht eine erste Anzeigeeinrichtung 101, auf der eine virtuelle CNC-Anzeigeeinrichtung dargestellt ist. Links daneben befindet sich im Ausführungsbeispiel eine zweite Anzeigeeinrichtung 102 zur Darstellung des virtuellen Abbilds der Werkzeugmaschine. Dem Benutzer steht ein reales Bedienpult 103 einer realen Werkzeugmaschine zur Verfügung. Zusätzlich kann er über eine Tastatur 104 Daten eingeben.

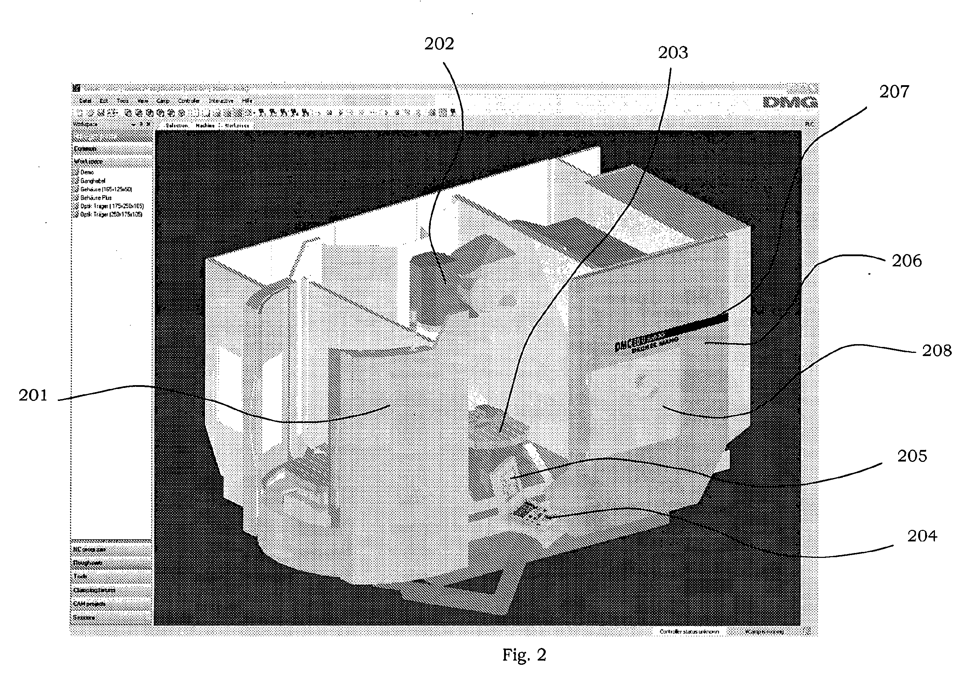

Figur 2 zeigt ein Beispiel für ein virtuelles Abbild einer Werkzeugmaschine näher. Man sieht im Wesentlichen alle Komponenten, die man auch an einer Werkzeugmaschine sehen würde. So ist zum Beispiel die Werkzeugmaschinenkammer 201 visualisiert. Weiterhin sieht man den Bearbeitungskopf 202 der Werkzeugmaschine und den entsprechenden Tisch 203 für die Aufnahme des Werkstücks. Genauso ist ein CNC-Bedienpult 204 und eine CNC-Anzeigeeinrichtung 205 zu sehen. Selbst die Tür der Werkzeugmaschinenkammer 206 ist gezeigt einschließlich der Typenbezeichnung 207 der Werkzeugmaschine und dem Fenster 208 der Tür. Dies verdeutlicht, dass dem Benutzer der erfindungsgemäßen Vorrichtung ein sehr realistisches Abbild einer Werkzeugmaschine präsentiert wird.

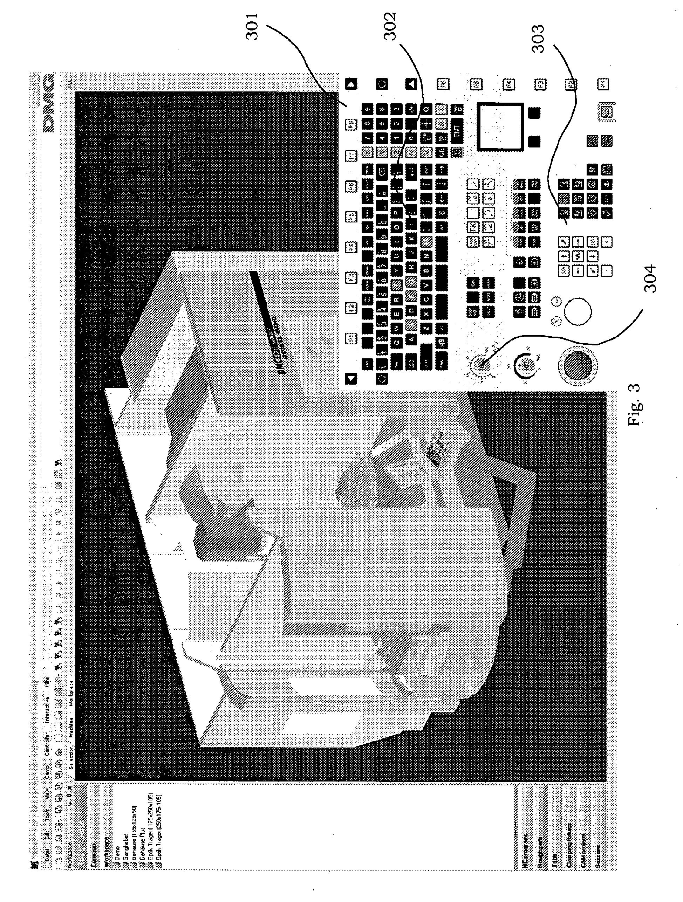

Figur 3 zeigt das virtuelle Abbild der Werkzeugmaschine aus Fig. 2 mit einem zusätzlichen virtuellen Bedienpult 301. Das virtuelle Bedienpult umfasst ein CNC-Bedienfeld 302 und ein PLC-Bedienfeld 303. Ein Override-Drehknopf ist mit dem Bezugszeichen 304 bezeichnet.

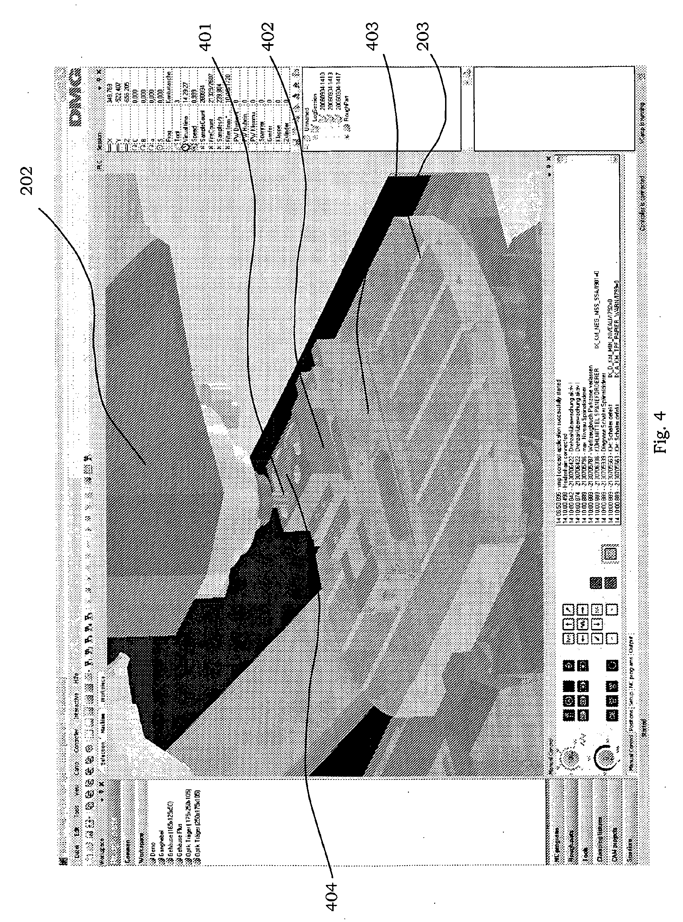

Figur 4 zeigt, dass bei diesem Ausführungsbeispiel viele Elemente der Werkzeugmaschine ausgeblendet werden können. Im gezeigten Beispiel ist die Werkzeugmaschinenkammer 201 nicht mehr zu sehen, so dass der Benutzer ungestört den Tisch 203 sehen kann. Der Kopf der Werkzeugmaschine 202 ist so eingefahren, dass das eingespannte Werkzeug 401 in das Werkstück 402 eintaucht. Das Werkstück 402 ist durch das Spannmittel 403 auf dem Tisch 203 befestigt. In dem virtuellen Abbild der Werkzeugmaschine wird der Abtrag 404 an dem Werkstück 402 visualisiert. Insgesamt kann der Benutzer in dieser Einstellung den gesamte Bewegungsablauf zur Bearbeitung des Werkstücks an der Werkzeugmaschine sehen.

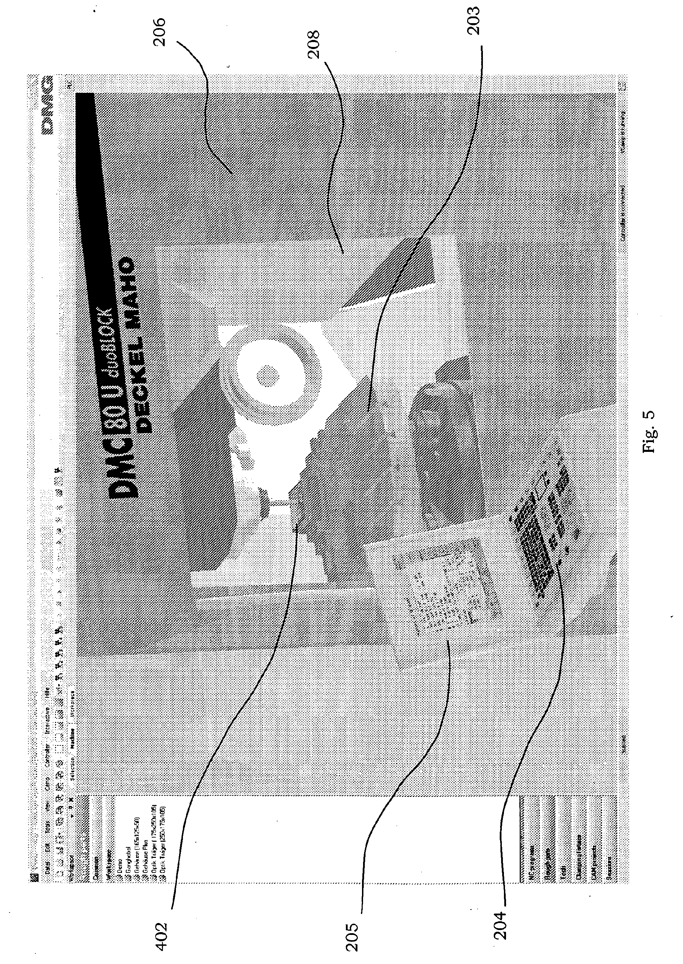

Figur 5 verdeutlicht, dass dem Benutzer der Vorrichtung zur Simulation ein realistischer Eindruck von dem vermittelt werden kann, was er sehen würde, wenn er an einer realen Werkzeugmaschine stehen würde. Der Benutzer steht an der virtuellen Werkzeugmaschine und schaut durch das Fenster 208 in der Tür 206 auf den Tisch 203 der Werkzeugmaschine. Dort sieht er den Bearbeitungsablauf an dem Werkstück 402. Gleichzeitig sieht er das Bedienpult 204 und die CNC-Anzeigeeinrichtung 205.

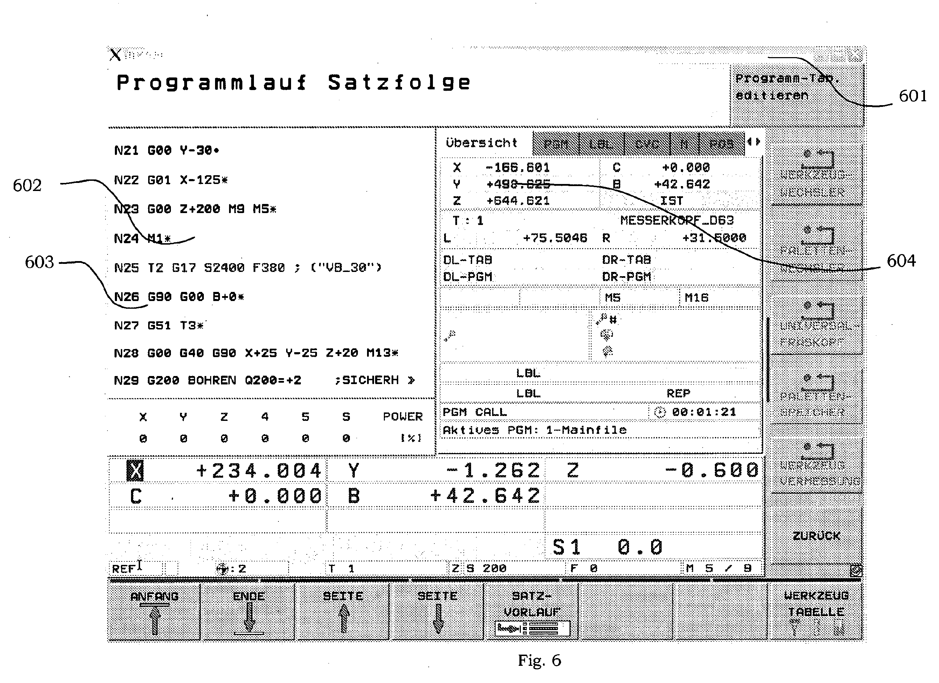

Figur 6 zeigt ein Beispiel für eine virtuelle CNC-Anzeigeeinrichtung 601. Insbesondere zeigt die virtuelle CNC-Anzeigeeinrichtung 601 das auszuführende CNC-Teileprogramm 602, das aus einzelnen Sätzen 603 besteht. Weiterhin ist unter anderem die Position des Werkzeugmaschinenkopfes zu sehen in Feld 604.

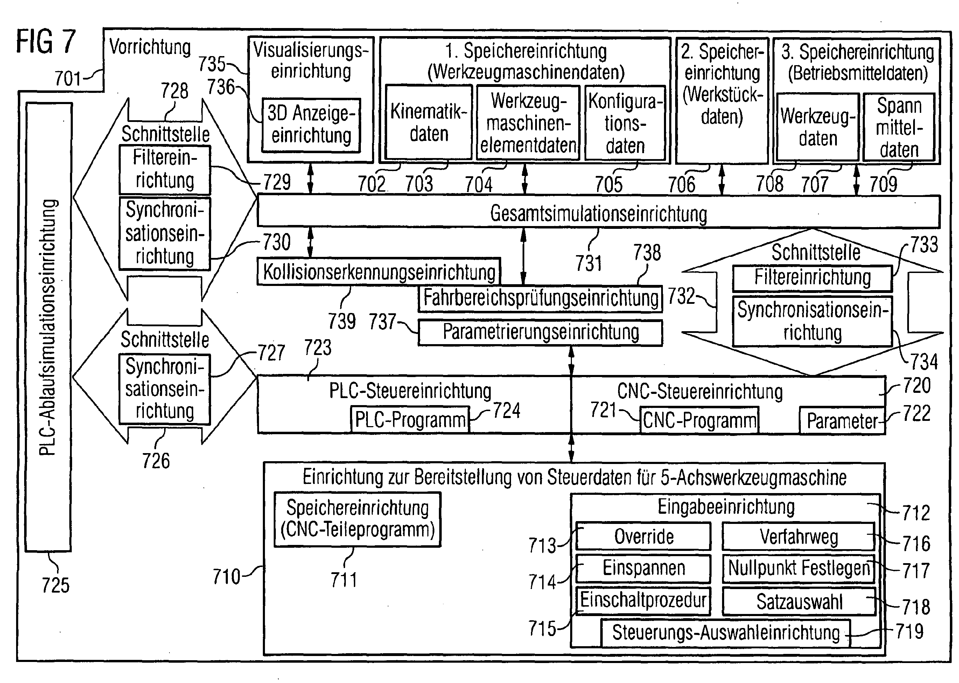

Figur 7 zeigt den schematischen Aufbau einer Ausführungsform einer erfindungsgemäßen Vorrichtung zur Simulation eines Ablaufs zur Bearbeitung eines Werkstücks an einer Werkzeugmaschine. Die Vorrichtung 701 umfasst eine erste Speichereinrichtung 702, in der Werkzeugmaschinendaten gespeichert werden. Die erste Speichereinrichtung umfasst weitere Speichereinrichtungen. Eine Speichereinrichtung speichert Kinematikdaten 703. Eine weitere Speichereinrichtung speichert Werkzeugmaschinenelementdaten 704. Noch eine Speichereinrichtung, die von der ersten Speichereinrichtung umfasst wird, speichert Konfigurationsdaten 705. Weiterhin umfasst die Vorrichtung 701 eine zweite Speichereinrichtung 706, die Werkstückdaten speichert. In einer dritten Speichereinrichtung 707, die von der Vorrichtung 701 umfasst wird, werden Betriebsmitteldaten gespeichert. Die dritte Speichereinrichtung 707 umfasst eine weitere Speichereinrichtung 708 zur Speicherung von Werkzeugdaten und noch eine Speichereinrichtung 709 zur Speicherung von Spannmitteldaten.

Die Vorrichtung 701 umfasst eine Einrichtung zur Bereitstellung von Steuerdaten 710, im vorliegenden Beispiel von Steuerdaten für eine Fünf-Achs-Werkzeugmaschine. Diese Einrichtung zur Bereitstellung von Steuerdaten 710 umfasst eine Speichereinrichtung 711, in der zumindest ein CNC-Teileprogramm gespeichert wird. Weiterhin umfasst die Einrichtung zur Bereitstellung von Steuerdaten 710 eine Eingabeeinrichtung 712. Die Eingabeeinrichtung 712 umfasst eine Vielzahl von weiteren Eingabeeinrichtungen. Insbesondere umfasst die Eingabeeinrichtung 712 eine Eingabeeinrichtung zur Eingabe eines Overrides 713, eine Eingabeeinrichtung zur Eingabe von Steuerdaten zum Einspannen von Werkstücken 714, eine Eingabeeinrichtung zur Eingabe von Steuerdaten, um eine Einschaltprozedur auszuführen 715, eine Eingabeeinrichtung, um einen Verfahrweg manuell einzugeben 716, eine Eingabeeinrichtung zur Eingabe von Steuerdaten, um einen Nullpunkt festzulegen 717, eine Eingabeeinrichtung, um einen Satz innerhalb des CNC-Teileprogramms auszuwählen 718 und eine Eingabeeinrichtung, um eine Steuerung auszuwählen 719, die im Rahmen der Simulation eines Ablaufs zur Bearbeitung eines Werkstücks an einer Werkzeugmaschine verwendet werden soll. Diese Aufzählung von Eingabeeinrichtungen, die in der Eingabeeinrichtung 712 umfasst sind, ist nicht abschließend zu verstehen, sondern dient lediglich zur Illustration einiger Aspekte der Eingabeeinrichtung.

Weiterhin umfasst die Vorrichtung zur Simulation eines Ablaufs zur Verarbeitung eines Werkstücks an einer Werkzeugmaschine 701 eine CNC-Steuereinrichtung 720. Diese CNC-Steuereinrichtung 720 umfasst ein CNC-Programm 721. Weiterhin umfasst die CNC-Steuereinrichtung im vorliegenden Ausführungsbeispiel Parameter 722, die die CNC-Steuereinrichtung parametrieren.

Zusätzlich umfasst die Vorrichtung 701 eine PLC-Steuereinrichtung 723, die ein PLC-Programm 724 umfasst. Das PLC-Programm bildet eine reale PLC-Steuerung einer realen Werkzeugmaschine ab.

Darüber hinaus umfasst die Vorrichtung 701 eine PLC-Ablaufsimulationseinrichtung 725 zur Simulation der PLC-Abläufe an einer Werkzeugmaschine. Die PLC-Steuereinrichtung 723 kommuniziert mit der PLC-Ablaufsimulationseinrichtung 725 über eine Schnittstelle 726. Diese Schnittstelle 726 umfasst eine Synchronisationseinrichtung 727, die bewirkt, dass die PLC-Steuereinrichtung 723 immer erst einen ganzen Satz von PLC-Steuerungsausgangsdaten schreibt, bevor die PLC-Ablauf simulationseinrichtung 725 diese ausliest. In der umgekehrten Richtung sorgt die Synchronisationseinrichtung 727 dafür, dass die PLC-Ablaufsimulationseinrichtung 725 immer erst einen ganzen Satz von PLC-Steuerungseingangsdaten schreibt, bevor die PLC-Steuereinrichtung 723 diese PLC-Steuerungseingangsdaten ausliest.

Die PLC-Ablaufsimulationseinrichtung 725 erzeugt unter anderem PLC-Simulationsdaten. Diese PLC-Simulationsdaten kommuniziert die PLC-Ablaufsimulationseinrichtung 725 an eine Gesamtsimulationseinrichtung 731. Die Kommunikation der PLC-Simulationsdaten erfolgt über eine Schnittstelle 728, die eine Filtereinrichtung 729 und eine Synchronisationseinrichtung 730 umfasst. Die Filtereinrichtung 729 sorgt dafür, dass die Menge der PLC-Simulationsdaten, die von der PLC-Ablaufsimulationseinrichtung 725 an die Gesamtsimulationseinrichtung 731 übergeben wird, eingestellt werden kann. Die Synchronisationseinrichtung 730 synchronisiert die Kommunikation zwischen der PLC-Ablaufsimulationseinrichtung 725 und der Gesamtsimulationseinrichtung 731.

Weiterhin erhält die Gesamtsimulationseinrichtung 731 CNC-Daten von der CNC-Steuereinrichtung 720 über die Schnittstelle 732. Die Schnittstelle 732 umfasst wiederum eine Filtereinrichtung 733 und eine Synchronisationseinrichtung 734. Diese Filtereinrichtung 733 bewirkt, dass die Menge der CNC-Daten, die von der CNC-Steuereinrichtung 720 an die Gesamtsimulationseinrichtung 731 gegeben wird, einstellbar ist. Die Synchronisationseinrichtung 734 synchronisiert die Kommunikation zwischen der CNC-Steuereinrichtung 720 und der Gesamtsimulationseinrichtung 731.

Die Gesamtsimulationseinrichtung 731 erzeugt Gesamtsimulationsdaten betreffend den Ablauf zur Bearbeitung eines Werkstücks an der Werkzeugmaschine. Für die Erzeugung der Gesamtsimulationsdaten verwendet die Gesamtsimulationseinrichtung 731 die PLC-Simulationsdaten, die sie von der PLC-Ablaufsimulationseinrichtung 725 erhält, die CNC-Daten, die sie von der CNC-Steuereinrichtung 720 erhält, die Werkzeugmaschinendaten aus der ersten Speichereinrichtung 702, die Werkstückdaten aus der zweiten Speichereinrichtung 706, und die Betriebsmitteldaten aus der dritten Speichereinrichtung 707.

Die erzeugten Gesamtsimulationsdaten gibt die Gesamtsimulationseinrichtung 731 an eine Visualisierungseinrichtung 735. Diese Visualisierungseinrichtung 735 umfasst eine 3D-Anzeigeeinrichtung 736. Mit Hilfe der 3D-Anzeigeeinrichtung 736 visualisiert die Visualisierungseinrichtung 735 die Werkzeugmaschine einschließlich des Werkstücks und der Betriebsmittel und den Bearbeitungsablauf der Werkzeugmaschine zur Bearbeitung des Werkstücks.

Zusätzlich umfasst die Vorrichtung 701 eine Parametrierungseinrichtung 737 zur Parametrierung der CNC-Steuereinrichtung 720 und/oder der PLC-Steuereinrichtung 723.

Eine Kollisionserkennungseinrichtung 739 erkennt in Abhängigkeit der Gesamtsimulationsdaten, die sie von der Gesamtsimulationseinrichtung 731 erhält, Kollisionen zwischen der Werkzeugmaschine einschließlich der Betriebsmittel und dem Werkstück.

Zusätzlich umfasst die Vorrichtung 701 eine Fahrbereichsprüfungseinrichtung 738 zur Prüfung, ob eine vorbestimmte Position von der Werkzeugmaschine angefahren werden kann.

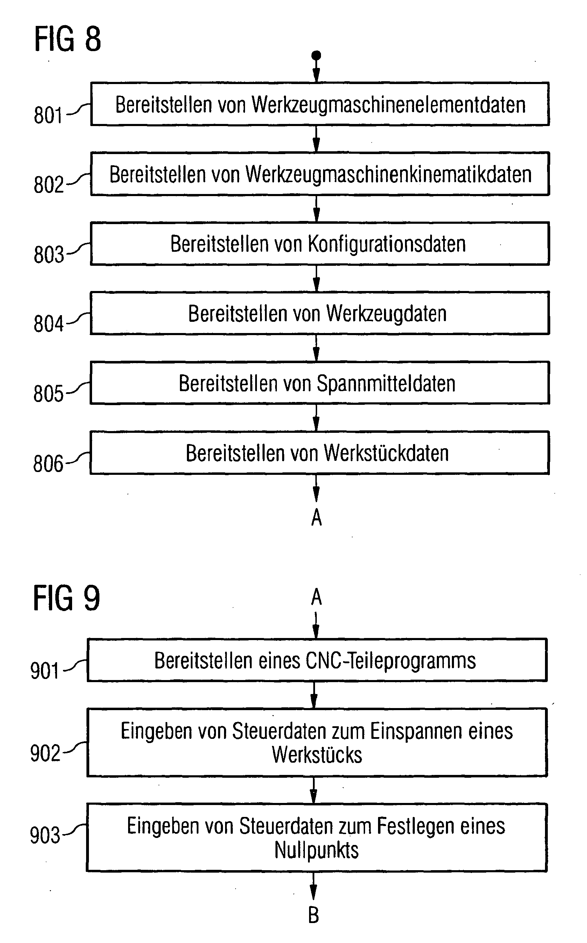

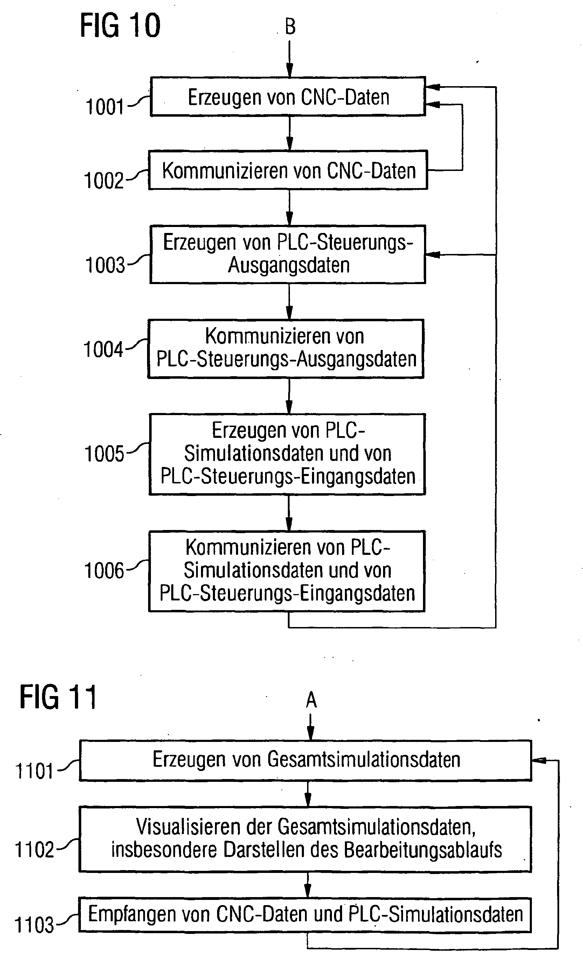

Figur 8 zeigt einen ersten Teil eines Ausführungsbeispiels des Verfahrens zur Simulation eines Ablaufs zur Bearbeitung eines Werkstücks an einer Werkzeugmaschine. In Schritt 801 werden Werkzeugmaschinenelementdaten bereitgestellt. In Schritt 802 werden Werkzeugmaschinenkinematikdaten bereitgestellt. In Schritt 803 erfolgt die Bereitstellung von Konfigurationsdaten. Danach werden Werkzeugdaten in Schritt 804 bereitgestellt. Hierauf folgt die Bereitstellung von Spannmitteldaten in Schritt 805 und die Bereitstellung von Werkstückdaten in Schritt 806. An diesem Punkt A in dem Verfahren werden die Prozesse angestoßen, die in Fig. 9 und in Fig. 11 gezeigt sind.

Figur 9 zeigt einen zweiten Teil einer Ausführungsform des Verfahrens zur Simulation eines Ablaufs zur Bearbeitung eines Werkstücks an einer Werkzeugmaschine. In Schritt 901 wird ein CNC-Teileprogramm bereitgestellt. Anschließend werden in Schritt 902 Steuerdaten zum Einspannen eines Werkstücks vom Benutzer eingegeben. Darauf gibt der Benutzer Steuerdaten ein zum Festlegen eines Nullpunkts in Schritt 903. An dieser Stelle B wird der Prozess angestoßen, der in Fig. 10 verdeutlicht ist.

Figur 10 illustriert einen dritten Teil eines Ausführungsbeispiels des Verfahrens zur Simulation eines Ablaufs zur Bearbeitung eines Werkstücks an einer Werkzeugmaschine. In Schritt 1001 werden CNC-Daten erzeugt. Diese CNC-Daten werden in Schritt 1002 kommuniziert. Entweder folgt darauf die Erzeugung neuer CNC-Daten (Schritt 1001) oder es werden PLC-Steuerungsausgangsdaten in Schritt 1003 erzeugt. Anschließend werden die erzeugten PLC-Steuerungsausgangsdaten in Schritt 1004 kommuniziert. In Schritt 1005 werden PLC-Simulationsdaten und PLC-Steuerungseingangsdaten erzeugt. Diese PLC-Simulationsdaten und PLC-Steuerungseingangsdaten werden in Schritt 1006 kommuniziert. Danach springt die Prozedur entweder zu Schritt 1003 oder zu Schritt 1001 zurück. Die in Figur 10 gezeigte Prozedur kann natürlich beendet werden, insbesondere durch eine Eingabe durch den Nutzer oder durch Erreichen des Endes des CNC-Teileprogramms.

Figur 11 illustriert einen vierten Teil eines Ausführungsbeispiels des Verfahrens zur Simulation eines Ablaufs zur Bearbeitung eines Werkstücks an der Werkzeugmaschine. In Schritt 1101 werden Gesamtsimulationsdaten erzeugt. Diese Gesamtsimulationsdaten werden in Schritt 1102 visualisiert. Insbesondere wird der Ablauf zur Bearbeitung des Werkstücks an der Werkzeugmaschine dargestellt. In Schritt 1103 werden CNC-Daten und PLC-Simulationsdaten empfangen, sofern solche vorliegen. Anschließend wird zu Schritt 1101 zurückgesprungen, in dem auf Grundlage der neu empfangenen CNC-Daten und der neu empfangenen PLC-Simulationsdaten neue Gesamtsimulationsdaten erstellt werden. Auch die in Figur 11 gezeigte Prozedur kann beendet werden, vorzugsweise durch eine Eingabe durch den Nutzer.

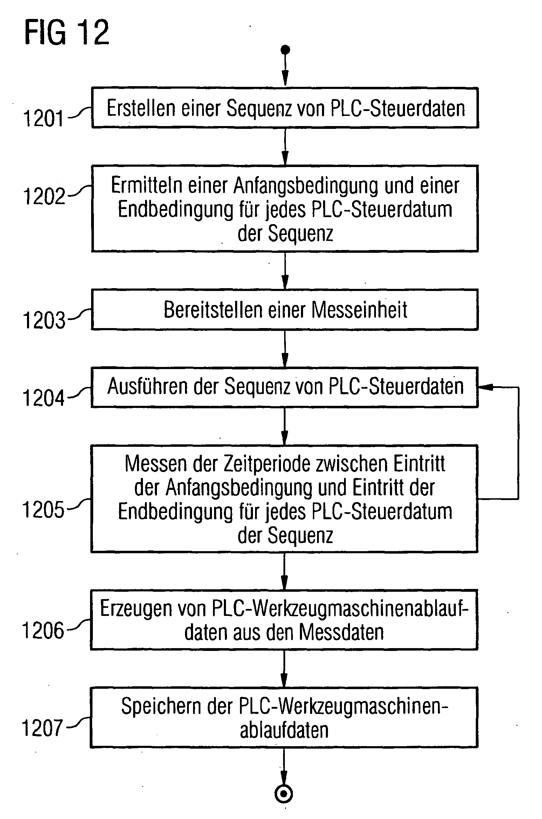

Figur 12 zeigt eine Ausführungsform eines nicht beanspruchten Verfahrens zum Erstellen von PLC-Werkzeugmaschinenablaufdaten. In Schritt 1201 wird eine Sequenz von PLC-Steuerdaten erstellt. Anschließend werden in Schritt 1202 eine Anfangsbedingung und eine Endbedingung für jedes PLC-Steuerdatum der Sequenz ermittelt. In Schritt 1203 wird eine Messeinheit bereitgestellt. Anschließend wird die Sequenz von PLC-Steuerdaten in Schritt 1204 an einer realen Werkzeugmaschine mit Hilfe einer realen PLC-Steuerung ausgeführt. Während der Ausführung werden jeweils die Zeitperioden zwischen dem Eintritt der Anfangsbedingung und dem Eintritt der Endbedingung für jedes PLC-Steuerdatum der Sequenz von der Messeinheit gemessen (Schritt 1205). Es wird also ein PLC-Steuerdatum nach dem anderen ausgeführt und es wird gemessen, wann die Anfangsbedingung und wann die Endbedingung eintritt. Anschließend wird der zeitliche Abstand zwischen dem Eintritt der Anfangsbedingung und dem Eintritt der Endbedingung ermittelt. In Schritt 1206 werden aus den Messdaten PLC-Werkzeugmaschinenablaufdaten erzeugt. Diese PLC Werkzeugmaschinenablaufdaten werden in Schritt 1207 gespeichert.

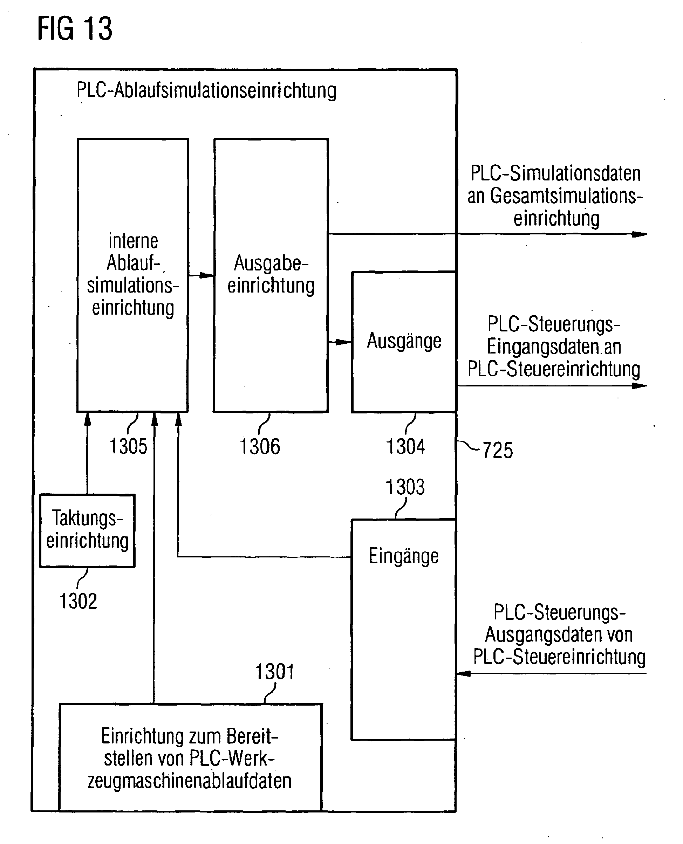

Figur 13 zeigt ein Ausführungsbeispiel einer nicht beanspruchten PLC-Ablaufsimulationseinrichtung. Die PLC-Ablaufsimulationseinrichtung 725 umfasst eine Einrichtung zum Bereitstellen von PLC-Werkzeugmaschinenablaufdaten 1301. Diese Einrichtung zum Bereitstellen von PLC-Werkzeugmaschinenablaufdaten 1301 kann beispielsweise eine Schnittstelle zur ersten Speichereinrichtung 702 sein, in der die PLC-Werkzeugmaschinenablaufdaten gespeichert sind. Die PLC-Ablaufsimulationseinrichtung 725 umfasst weiterhin eine Taktungseinrichtung 1302 zur Taktung der Ablaufsimulation der Werkzeugmaschine, wobei die PLC-Abläufe der Werkzeugmaschine insbesondere in zeitlicher Hinsicht durch die PLC-Werkzeugmaschinenablaufdaten beschrieben werden.

Weiterhin umfasst die PLC-Ablaufsimulationseinrichtung 725 Eingänge 1303 zum Empfangen von PLC-Steuerungsausgangsdaten von der PLC-Steuereinrichtung 723. Weiterhin umfasst die PLC-Ablaufsimulationseinrichtung 725 Ausgänge 1304, um PLC-Steuerungseingangsdaten an die PLC-Steuereinrichtung 723 zu übergeben. Darüber hinaus umfasst die PLC-Ablaufsimulationseinrichtung 725 eine interne Ablaufsimulationseinrichtung 1305, die PLC-Simulationsdaten und PLC-Steuerungseingangsdaten in Abhängigkeit der Eingangssignale an den Eingängen 1303, der PLC-Werkzeugmaschinenablaufdaten, so wie sie von der Einrichtung zum Bereitstellen von PLC-Werkzeugmaschinenablaufdaten 1301 geliefert werden, und der Taktung der Taktungseinrichtung 1302 erzeugt. Die PLC-Simulationsdaten werden durch die Ausgabeeinrichtung 1306 an die Gesamtsimulationseinrichtung 731 gegeben und die PLC-Steuerungseingangsdaten werden mit Hilfe der Ausgabeeinrichtung 1306 über die Ausgänge 1304 ausgegeben.

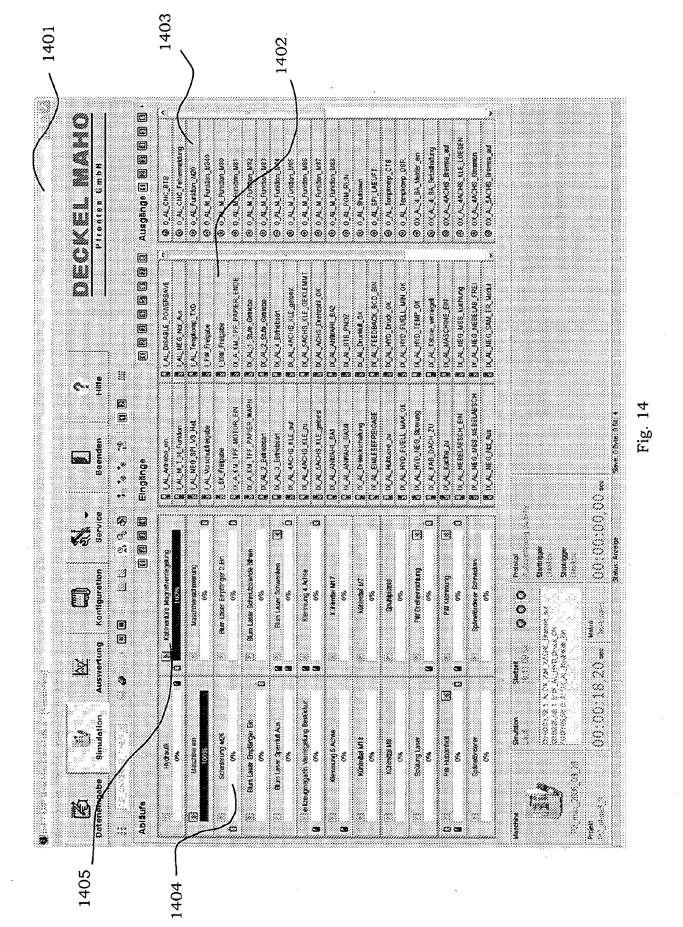

Figur 14 illustriert eine Ausführungsform einer Benutzerschnittstelle zu einer Ausführungsform der nicht beanspruchten PLC-Ablaufsimulationseinrichtung. Die Benutzerschnittstelle 1401 umfasst einen Ausgabebereich 1402, in dem der Zustand der Eingänge dargestellt wird. Jeden Eintrag dort kann man sich so vorstellen, dass gezeigt wird, ob auf einem Eingangsdraht eine 0 (z. B. 0 Volt) oder eine Eins (z. B. 5 Volt) anliegt. Ob eine 0 oder eine 1 anliegt, wird durch das grafische Icon vor dem Eintrag angezeigt. Die Benutzerschnittstelle 1401 umfasst weiterhin einen Ausgabebereich 1403, in dem der Zustand der Ausgänge angezeigt wird. Jeder der dort gezeigten Einträge zeigt den Zustand, der auf einem Ausgang anliegt. Weiterhin umfasst die Benutzerschnittstelle 1401 einen Ausgabebereich 1404, in dem der Komplettierungsgrad der PLC-Abläufe dargestellt wird. Beispielsweise ist dem Feld 1405 zu entnehmen, dass der Schritt, die Kabinentür magnetisch zu verriegeln, zu 100 Prozent ausgeführt ist.

Die Ausführungsbeispiele und Zeichnungen sind rein illustrativ und nicht beschränkend aufzufassen. Es ist möglich, die in den Ausführungsbeispielen beschriebenen Merkmale in abweichender Weise miteinander zu kombinieren, um auf diese Weise weitere Ausführungsbeispiele bereitzustellen, die für den entsprechenden Anwendungszweck optimiert sind. Soweit derartige Modifikationen für den Fachmann ohne weiteres ersichtlich sind, sollen sie durch die obige Beschreibung der Ausführungsbeispiele implizit offenbart sein.

Beispielsweise wurden in Fig. 7 viele technische Merkmale beschrieben, die optional sind. Beispielsweise ist eine erfindungsgemäße Vorrichtung ohne Kollisionserkennungseinrichtung und ohne Fahrbereichsprüfungseinrichtung denkbar. Dass diese Einrichtungen weggelassen werden können, um so ein weiteres Ausführungsbeispiel bereitzustellen, ist offensichtlich für den Fachmann, so dass entsprechende Ausführungsbeispiele auch ohne diese Einrichtungen als implizit offenbart gelten sollen.

## Patentansprüche

1. Vorrichtung (701) zur Simulation eines Ablaufs zur Bearbeitung eines Werkstücks an einer Werkzeugmaschine, umfassend
- eine erste Speichereinrichtung (702) zur Speicherung von Werkzeugmaschinendaten zur Erzeugung eines virtuellen dreidimensionalen Abbilds der Werkzeugmaschine einschließlich des Werkzeugmaschinenarbeitsraumes mit Werkzeugmaschinentisch (203),
- eine zweite Speichereinrichtung (706) zur Speicherung von Werkstückdaten zur Erzeugung eines virtuellen dreidimensionalen Abbilds des Werkstücks,
- eine dritte Speichereinrichtung (707) zur Speicherung von Betriebsmitteldaten zur Erzeugung eines virtuellen Abbilds eines Werkzeugs und eines Spannmittels (403) einschließlich Werkzeugmaschinenkopf und Spindel,
- eine Einrichtung zur Bereitstellung von Steuerdaten (710) zur Ausführung eines Ablaufs im Zusammenhang mit der Bearbeitung des Werkstücks an der Werkzeugmaschine, die eine Speichereinrichtung zur Speicherung eines CNC-Teileprogramms (711), das auf der Werkzeugmaschine ausführbar ist, und eine Eingabeeinrichtung (712) zur manuellen Eingabe von Steuerdaten durch einen Nutzer zur Änderung des Betriebszustandes der Werkzeugmaschine umfasst,
- eine CNC-Steuereinrichtung (720) zur Erzeugung von CNC-Daten in Abhängigkeit der manuell eingegebenen Steuerdaten und des CNC-Teileprogramms (711),
- eine PLC-Steuereinrichtung (723) zur Erzeugung von PLC-Steuerungs-Ausgangsdaten,
- eine PLC-Ablaufsimulationseinrichtung (725) zur Erzeugung von PLC-Simulationsdaten und von PLC-Steuerungs-Eingangsdaten in Abhängigkeit der PLC-Steuerungs-Ausgangsdaten und der Werkzeugmaschinendaten zur Simulation von Betriebsfunktionen des PLC-Programms (724) der PLC-Steuerung der Werkzeugmaschine,
- eine Gesamtsimulationseinrichtung (731) zur Erzeugung von Gesamtsimulationsdaten in Abhängigkeit von den CNC-Daten, den PLC-Simulationsdaten, den Werkzeugmaschinendaten, den Werkstückdaten und den Betriebsmitteldaten, wobei die Gesamtsimulationsdaten geeignet sind Abläufe zur Bearbeitung des Werkstücks an der Werkzeugmaschine einschließlich eines manuellen Verfahrens von Werkzeugmaschinenkopf, Spindel und Tisch durch den Nutzer, die durch die CNC-Daten, die PLC-Steuerung der Werkzeugmaschine und die manuell eingegebenen Steuerdaten bestimmt werden, zu simulieren und
- eine Visualisierungseinrichtung (735) zur Visualisierung der Gesamtsimulationsdaten, umfassend eine Anzeigeeinrichtung (736) zur dreidimensionalen Darstellung der Abläufe zur Bearbeitung des Werkstücks an der Werkzeugmaschine gemäß dem vorgegebenen CNC-Teileprogramms, den manuell eingegebenen Steuerdaten und der PLC-Steuerung der Werkzeugmaschine einschließlich des manuellen Verfahrens von Werkzeugmaschinenkopf, Spindel und Tisch durch den Nutzer.

2. Vorrichtung nach Anspruch 1, **dadurch gekennzeichnet, dass** die CNC-Steuereinrichtung (720) ein CNC-Programm (721) umfasst, das aus dem Quellcode eines CNC-Programms einer realen CNC-Steuerung erzeugt wurde.

3. Verfahren zur Simulation eines Ablaufs zur Bearbeitung eines Werkstücks an einer Werkzeugmaschine, umfassend die Schritte
- Bereitstellen von Werkzeugmaschinendaten (801, 802, 803) zur Erzeugung eines virtuellen dreidimensionalen Abbilds der Werkzeugmaschine einschließlich des Werkzeugmaschinenarbeitsraumes mit Werkzeugmaschinentisch (203),
- Bereitstellen von Werkstückdaten (806) zur Erzeugung eines virtuellen dreidimensionalen Abbilds des Werkstücks,
- Bereitstellen von Betriebsmitteldaten (804, 805) zur Erzeugung des virtuellen dreidimensionalen Abbilds eines Werkzeugs und eines Spannmittels (403) einschließlich Werkzeugmaschinenkopf und Spindel,
- Bereitstellen von Steuerdaten (901, 902, 903) zur Ausführung eines Ablaufs im Zusammenhang mit der Bearbeitung des Werkstücks an der Werkzeugmaschine einschließlich eines CNC-Teileprogramms (711), das auf der Werkzeugmaschine ausführbar ist, wobei das Bereitstellen von Steuerdaten zusätzlich eine manuellen Eingabe von Steuerdaten durch einen Nutzer zur Änderung des Betriebszustandes der Werkzeugmaschine umfasst,
- Erzeugen von CNC-Daten (1001) in Abhängigkeit der manuell eingegebenen Steuerdaten und des CNC-Teileprogramms (711),
- Erzeugen von PLC-Steuerungs-Ausgangsdaten (1003),
- Erzeugen von PLC-Simulationsdaten und von PLC-Steuerungs-Eingangsdaten (1005) in Abhängigkeit der PLC-Steuerungs-Ausgangsdaten und der Werkzeugmaschinendaten zur Simulation von Betriebsfunktionen des PLC-Programms (724) der PLC-Steuerung der Werkzeugmaschine,
- Erzeugen von Gesamtsimulationsdaten (1101) in Abhängigkeit von den CNC-Daten (1001), den PLC-Simulationsdaten, den Werkzeugmaschinendaten, den Werkstückdaten und den Betriebsmitteldaten, wobei die Gesamtsimulationsdaten geeignet sind Abläufe zur Bearbeitung des Werkstücks an der Werkzeugmaschine einschließlich eines manuellen Verfahrens von Werkzeugmaschinenkopf, Spindel und Tisch durch den Nutzer, die durch die CNC-Daten, die PLC-Steuerung der Werkzeugmaschine und die manuell eingegebenen Steuerdaten bestimmt werden, zu simulieren und
- Visualisieren der Gesamtsimulationsdaten (1101), umfassend eine dreidimensionalen Darstellung der Abläufe zur Bearbeitung des Werkstücks an der Werkzeugmaschine.

4. Verfahren nach Anspruch 3, **gekennzeichnet durch** den Schritt Erzeugen eines CNC-Programms (721) aus dem Quellcode eines CNC-Programms einer realen CNC-Steuerung.

5. Computerprogrammprodukt, das ein computerlesbares Medium und ein darin gespeichertes Computerprogramm umfasst, wobei das Computerprogramm in der Form einer Abfolge von Zuständen gespeichert ist, die Befehlen entspricht, die eingerichtet sind von einem Datenverarbeitungsmittel einer Datenverarbeitungseinrichtung verarbeitet zu werden, so dass das Verfahren nach einem der Ansprüche 3 oder 4 ausgeführt wird.

## Claims

1. A device (701) for simulating a sequence for machining a workpiece on a machine tool, comprising
- a first storage means (702) for storing machine tool data for creating a virtual three-dimensional image of the machine tool that includes the machine tool working room comprising the machine tool table (203),
- a second storage means (706) for storing workpiece data for creating a virtual three-dimensional image of the workpiece,
- a third storage means (707) for storing resource data for creating a virtual image of a tool and a clamping means (403) including the machine tool head and spindle,
- a means for providing control data (710) for performing a sequence in conjunction with the machining of the workpiece on the machine tool that comprises a storage means for storing a CNC part program (711) executable on the machine tool and an input means (712) for manually inputting control data by a user for changing the operating state of the machine tool,
- a CNC control means (720) for creating CNC data depending on the manually input control data and the CNC part program (711),
- a PLC control means (723) for creating PLC control output data,
- a PLC sequence simulation means (725) for creating PLC simulation data and PLC control input data depending on the PLC control output data and the machine tool data for simulating operational functions of the PLC program (724) of the PLC control of the machine tool,
- an overall simulation means (731) for creating overall simulation data depending on the CNC data, the PLC simulation data, the machine tool data, the workpiece data and the resource data, the overall simulation data being suitable for simulating sequences for machining the workpiece on the machine tool including a manual movement of the machine tool head, spindle and table by the user that are determined by the CNC data, the PLC control of the machine tool and the manually input control data, and
- a visualization means (735) for visualizing the overall simulation data, comprising a display means (736) for three-dimensionally displaying the sequences for machining the workpiece on the machine tool in accordance with the predetermined CNC part program, the manually input control data and the PLC control of the machine tool including the manual movement of the machine tool head, spindle and table by the user.

2. The device of claim 1, **characterized in that** the CNC control means (720) comprises a CNC program (721) created from the source code of a CNC program of a real CNC control.

3. A method for simulating a sequence for machining a workpiece on a machine tool, comprising the steps of:
- providing machine tool data (801, 802, 803) for creating a virtual three-dimensional image of the machine tool including the machine tool working room comprising the machine tool table (203),
- providing workpiece data (806) for creating a virtual three-dimensional image of the workpiece,
- providing resource data (804), 805) for creating a virtual three-dimensional image of a tool and a clamping means (403) including the machine tool head and spindle,
- providing control data (901, 902, 903) for performing a sequence in conjunction with the machining of the workpiece on the machine tool including a CNC part program (711) executable on the machine tool, the providing of control data additionally comprising a manual input of control data by a user for changing the operating state of the machine tool,
- creating CNC data (1001) depending on the manually input control data and the CNC part program (711),
- creating PLC_control output data (1003),
- creating PLC simulation data and PLC control input data (1005) depending on the PLC control output data and the machine tool data for simulating operational functions of the PLC program (724) of the PLC control of the machine tool,
- creating overall simulation data (1101) depending on the CNC data (1001), the PLC simulation data, the machine tool data, the workpiece data and the resource data, the overall simulation data being suitable for simulating sequences for machining the workpiece on the machine tool including a manual movement of the machine tool head, spindle and table by the user that are determined by the CNC data, the PLC control of the machine tool and the manually input control data, and
- visualizing the overall simulation data (1101) comprising a three-dimensional display of the sequences for machining the workpiece on the machine tool.

4. The method of claim 3, **characterized by** the step of creating a CNC program (721) from the source code of a CNC program of a real CNC control.

5. A computer program product comprising a computer-readable medium and a computer program stored therein, the computer program being stored in the form of a sequence of states, the sequence of states corresponding to instructions adapted to be processed by a data processing medium of a data processing means so that the method is executed according to any one of claims 3 or 4.

## Revendications

1. Dispositif (701) de simulation d'un déroulement de l'usinage d'une pièce sur une machine-outil, comprenant
- un premier dispositif (702) de mémoire pour la mémorisation de données de machine-outil, pour la production d'une reproduction virtuelle en trois dimensions de la machine-outil, y compris de l'espace de travail de la machine-outil ayant une table (203) de machine-outil,
- un deuxième dispositif (706) de mémoire, pour la mémorisation de données de pièce, pour la production d'une reproduction virtuelle en trois dimensions de la pièce,
- un troisième dispositif (707) de mémoire, pour la mémorisation de données des moyens de fonctionnement pour la production d'une reproduction virtuelle d'un outil et d'un moyen (403) de blocage, y compris une tête de machine-outil et une broche,
- un dispositif de préparation de données (710) de commande, pour l'exécution d'un déroulement en liaison avec l'usinage de la pièce sur la machine-outil, qui comprend un dispositif de mémoire, pour la mémorisation d'un sous-programme CNC (711), qui peut être réalisé sur la machine-outil et un dispositif (712) d'entrée pour l'entrée manuelle de données de commande par un utilisateur, pour la modification de l'état de fonctionnement de la machine-outil,
- un dispositif (720) de commande CNC, pour la production de données CNC en fonction des données de commande entrées manuellement et du sous-programme CNC (711),
- un dispositif (723) de commande PLC, pour la production de données de sortie de commande PLC,
- un dispositif (725) d'optimisation de déroulement PLC, pour la production de données de simulation PLC et de données d'entrée de commande PLC en fonction de données de machine-outil, pour la simulation de fonctionnement du programme PLC (724) de la commande PLC de la machine-outil,
- un dispositif (731) de simulation globale, pour la production de données globales de simulation en fonction des données CNC, des données de simulation PLC, des données de la machine-outil, des données de la pièce et des données des moyens de fonctionnement, dans lequel les données globales de simulation sont propres à simuler des déroulements de l'usinage de la pièce sur la machine-outil, y compris un déplacement manuel de la tête de la machine-outil, de la broche et de la table par l'utilisateur, qui sont déterminés par les données CNC, par la commande PLC de la machine-outil et par les données de commande entrées manuellement et
- un dispositif (735) de visualisation, pour la visualisation des données globales de simulation, comprenant un dispositif (736) d'affichage pour la représentation en trois dimensions des déroulements pour l'usinage de la pièce sur la machine-outil, suivant le sous-programme PLC prescrit, les données de commande entrées manuellement et la commande PLC de la machine-outil, y compris le déplacement manuel de la tête de la machine-outil, de la broche et de la table par l'utilisateur.

2. Dispositif suivant la revendication 1,
**caractérisé en ce que** le dispositif (720) de commande CNC comprend un programme CNC (721) qui a été produit à partir du code source d'un programme CNC d'un automate CNC réel.

3. Procédé de simulation d'un déroulement pour l'usinage d'une pièce sur une machine-outil, comprenant les stades dans lesquels :
- on prépare des données (801, 802, 803) de machine-outil pour la production d'une reproduction visuelle en trois dimensions de la machine-outil, y compris de l'espace de travail de la machine-outil ayant une table (203) de machine-outil,
- on prépare des données (806) de pièce pour la production d'une reproduction visuelle en trois dimensions de la pièce,
- on prépare des données (804, 805) des moyens de fonctionnement pour la production de la reproduction visuelle en trois dimensions d'une pièce et d'un moyen (403) de blocage, y compris la tête de la machine-outil et la broche,
- on prépare des données (901, 902, 903) de commande pour la réalisation d'un déroulement en relation avec l'usinage de la pièce de la machine-outil, y compris un sous-programme CNC (711) qui peut être réalisé sur la machine-outil, la préparation de données de commande comprenant supplémentairement une entrée manuelle de données de commande par un utilisateur pour la modification de l'état de fonctionnement de la machine-outil,
- on produit des données CNC (1001) en fonction des données de commande entrées manuellement et du sous-programme CNC (711),
- on produit des données (1003) de sortie de commande PLC,
- on produit des données de simulation PLC et des données (1005) d'entrée de commande PLC en fonction des données de sortie de commande PLC et des données de la machine-outil pour la simulation des fonctions de fonctionnement du programme PLC (724) de la commande PLC de la machine-outil,
- on produit des données (1101) globales de simulation en fonction des données CNC (1001), des données de simulation PLC, des données de la machine-outil, des données de la pièce et des données des moyens de fonctionnement, les données globales de simulation étant appropriées à des déroulements de l'usinage de la pièce sur la machine-outil, y compris d'un déplacement manuel de la tête de la machine-outil, de la broche et de la table par l'utilisateur, qui sont déterminées par les données CNC par l'autoroute PLC de la machine-outil et par les données de commande entrées manuellement pour la simulation et
- on visualise les données (1101) globales de simulation comprenant une représentation en trois dimensions des déroulements pour l'usinage de la pièce sur la machine-outil.

4. Procédé suivant la revendication 3, **caractérisé par** le stade dans lequel on produit un programme CNC (721) à partir du code source d'un programme CNC d'un automate CNC réel.

5. Produit de programme informatique qui comprend un support pouvant être lu par ordinateur et un programme informatique qui y est mémorisé, le programme informatique étant mémorisé sous la forme d'une succession d'étapes qui correspondent à des instructions qui sont conçues pour être traitées par un moyen informatique à l'aide d'un dispositif informatique, de manière à exécuter le procédé suivant l'une des revendications 3 ou 4.
